(19)

Europäisches
Patentamt
European
Patent Office
Office européen
des brevets

(11) **EP 2 395 319 A2**

(12) **EUROPEAN PATENT APPLICATION**

(43) Date of publication:
**14.12.2011  Bulletin 2011/50**

(51) Int Cl.:
***G01B 21/04*** *(2006.01)*

(21) Application number: **11004640.6**

(22) Date of filing: **07.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.06.2010  JP 2010133077**

(71) Applicant: **Mori Seiki Co.,Ltd.
Nara 639-1160 (JP)**

(72) Inventors:
• **Nishikawa, Shizuo
Yamatokoriyama-Shi
Nara, 639-1160 (JP)**

• **Morita, Hisayoshi
Yamatokoriyama-Shi
Nara, 639-1160 (JP)**
• **Hamanaka, Hirokazu
Yamatokoriyama-Shi
Nara, 639-1160 (JP)**

(74) Representative: **Schmidbauer, Andreas Konrad
Wagner & Geyer
Gewürzmühlstrasse 5
80538 München (DE)**

(54) **Method and apparatus for measuring workpiece on machine tool**

(57)     A measuring head (10) attached to a machine tool is swiveled by a predetermined angle (θ). A reference sphere (30) is then measured by the measuring head (10) from a first direction (E1) and a second direction (E2). Accordingly, coordinates of a center point (A1) of the reference sphere are acquired. First machine coordinates (P1) of the measuring head are coordinates when the measuring head measures the center point (A1) of the reference sphere from a first direction. Second machine coordinates (P2) of the measuring head are coordinates when the measuring head measures the center point (A1) of the reference sphere from a second direction. A 3-dimensional offset of the measuring head is acquired, based on the first machine coordinates (P1) and the second machine coordinates (P2) of the measuring head. Subsequently, the workpiece is measured by the measuring head, by using the 3-dimensional offset of the measuring head. As a result, the 3-dimensional offset of the measuring head is acquired, and thereby the workpiece can be measured by the measuring head because the measurement function intrinsic to the measuring head is effectively used without separately using another measuring instrument.

FIG.6

EP 2 395 319 A2

**Description**

Field of the Invention:

The present invention relates to a method and an apparatus for measuring a workpiece, on a machine tool having a measuring head attached thereto which can move and swivel relative to the workpiece, by the measuring head including a 3-dimensional offset.

Description of the Related Art:

For a machine tool such as a machining center or a multi-axis turning center, there have been proposed techniques of measuring the shape of the surface of a workpiece attached to the machine tool without removing the workpiece from the machine tool after machining.

Accordingly, a measuring head is attached to the machine tool and the workpiece is measured by moving the measuring head relative to the workpiece. The length of the measuring head attached to the machine tool is usually measured by using a touch sensor or an instrument separately.

In addition, it is also possible to install a reference object such as a reference sphere at a predetermined position of the machine tool with a high precision, and acquire the length of the measuring head by measuring the reference object using the measuring head. In this case, however, the reference object has to be preliminarily measured by using a dial gauge or the like.

Japanese published patent application No. 4-203917 describes a calibration method of a 3-dimensional measuring instrument. This technology relates to the 3-dimensional measuring instrument which is used for measuring the shape of a free-form surface such as an aspheric lens. This measuring instrument performs measurement by using a probe (equivalent to the measuring head of the present invention).

However, this 3-dimensional measuring instrument is not adapted to measure the length of the probe itself by using the probe. Although this calibration method based on the conventional technology uses a reference spherical surface, it has been necessary to separately use another measuring instrument for measuring the reference spherical surface.

It is an object of the present invention, which has been conceived to solve the above problems, to provide a method and an apparatus for measuring a workpiece on a machine tool. The method and the apparatus can effectively use the measurement function intrinsic to the measuring head for measuring the workpiece to acquire the 3-dimensional offset of the measuring head itself and can measure the workpiece by the measuring head, by simply installing a reference object such as a reference sphere at an arbitrary position, without separately using another measuring instrument such as a touch sensor or a dial gauge. Here, the above-mentioned term "offset" is a vector having the length and direction between intrinsic machine coordinates of the measuring head and measurement reference position coordinates of the measuring head.

SUMMARY OF THE INVENTION

In order to achieve the above objects, there is provided, in accordance with the present invention, a first method for measuring a workpiece by a wired or wireless measuring head including a 3-dimensional offset, wherein the measuring head attached to a machine tool is capable of moving relative to the workpiece along three perpendicular axes or two perpendicular axes and is capable of varying angle directions relative to the workpiece by one or more swivel spindles, the method comprising steps of

measuring a reference object placed at an arbitrary position for a plurality of times in the relative angle direction being varied by the measuring head;
calculating the 3-dimensional offset of the measuring head from variation of measurement results, along the three perpendicular axes, measured from the relative angle directions; and
subsequently, measuring the workpiece by the measuring head by using the 3-dimensional offset of the measuring head itself.

Specifically, there is provided a second method for measuring a workpiece by a wired or wireless measuring head including a 3-dimensional offset, wherein the measuring head attached to a machine tool is capable of swiveling and moving relative to the workpiece along three perpendicular axes or two perpendicular axes, the method comprising steps of

swiveling the measuring head by a predetermined angle to measure a reference object placed at an arbitrary position by the measuring head from a first direction and a second direction respectively, and thereby acquiring coordinates of an intrinsic specific point of the reference object;

calculating the 3-dimensional offset of the measuring head, based on first machine coordinates of the measuring head when the measuring head measured the specific point of the reference object from the first direction, and second machine coordinates of the measuring head when the measuring head measured the specific point of the reference object from the second direction; and

subsequently, measuring the workpiece by the measuring head by using the 3-dimensional offset of the measuring head itself.

There is provided a third method for measuring a workpiece by a laser beam by using a wired or wireless measuring head including a 3-dimensional offset, wherein the measuring head attached to a machine tool is capable of swiveling and moving relative to the workpiece along two axes of three perpendicular axes except for one axis along which the measuring head does not move,

the method comprising steps of

swiveling the measuring head by a predetermined angle to measure a reference object placed at an arbitrary position by the measuring head from a first direction and a second direction respectively, and thereby acquiring coordinates of an intrinsic specific point of the reference object;

acquiring respective offsets in directions of the two perpendicular axes along which the measuring head moves, according to first machine coordinates of the measuring head when the measuring head measured the specific point of the reference object from the first direction, and second machine coordinates of the measuring head when the measuring head measured the specific point of the reference object from the second direction;

acquiring inclination angles of the laser beam by a predetermined means, and calculating, with the inclination angles of the laser beam, an offset in a direction of the one axis along which the measuring head does not move;

calculating the 3-dimensional offset of the measuring head, based on the respective offsets in directions of the two perpendicular axes along which the measuring head moves, and based on the offset in a direction of the one axis along which the measuring head does not move; and

subsequently, measuring the workpiece by the measuring head by using the 3-dimensional offset of the measuring head itself.

There is provided a fourth method for measuring a workpiece attached to a table by a laser beam by using a wired or wireless measuring head which is attached to a machine tool and includes a 3-dimensional offset, the table being capable of swiveling about a swiveling center on the machine tool,

the method comprising steps of

placing a reference object having an intrinsic specific point at an arbitrary position on the table;

measuring the reference object on the table facing a first direction by the measuring head, and thereby acquiring a point group of first machine coordinates of the measuring head and distance data from a reference position which is a focal point of the laser beam;

calculating, with the acquired point group and distance data, coordinates of the specific point of the real reference object and coordinates of a first specific point of a first virtual reference object;

subsequently, swiveling the table about the swiveling center by a predetermined angle;

measuring the reference object on the table facing a second direction by the measuring head, and thereby acquiring a point group of second machine coordinates of the measuring head and distance data from the reference position;

calculating, with the acquired point group and distance data, coordinates of the specific point of the real reference object and coordinates of a second specific point of a second virtual reference object;

acquiring the 3-dimensional offset of the measuring head, based on the fact that a virtual triangle formed by the first specific point of the first virtual reference object, the second specific point of the second virtual reference object, and a virtual swiveling center is congruent with a real triangle formed by the respective specific points of the real reference object before and after swiveling of the table by the predetermined angle and the real swiveling center; and

subsequently, measuring the workpiece by the measuring head by using the 3-dimensional offset of the measuring head itself.

There is provided a fifth method for measuring a workpiece by a laser beam by using a wired or wireless measuring head including a 3-dimensional offset, wherein the measuring head attached to a machine tool is capable of swiveling and moving relative to the workpiece along two axes of three perpendicular axes except for one axis along which the measuring head does not move, and a table is capable of swiveling about a swiveling center on the machine tool,

the method comprising steps of

placing a reference object having an intrinsic specific point at an arbitrary position on the table;

measuring the reference object on the table facing a first direction by the measuring head, and thereby acquiring a point group of first machine coordinates of the measuring head and distance data from a reference position which is a focal point of the laser beam; calculating, with the acquired point group and distance data, coordinates of the specific point of the real reference object and coordinates of a first specific point of a first virtual reference object;

subsequently, swiveling the table about the swiveling center by a predetermined angle;

measuring the reference object on the table facing a second direction by the measuring head, and thereby acquiring a point group of second machine coordinates of the measuring head and distance data from the reference position; calculating, with the acquired point group and distance data, coordinates of the specific point of the real reference object and coordinates of a second specific point of a second virtual reference object;

acquiring respective offsets in directions of the two perpendicular axes along which the measuring head moves, based on the fact that a virtual triangle formed by the first specific point of the first virtual reference object, the second specific point of the second virtual reference object, and a virtual swiveling center is congruent with a real triangle formed by the respective specific points of the real reference object before and after swiveling of the table by the predetermined angle and the real swiveling center;

acquiring inclination angles of the laser beam by a predetermined means, and calculating, with the inclination angles of the laser beam, an offset in a direction of the one axis along which the measuring head does not move;

calculating the 3-dimensional offset of the measuring head, based on the respective offsets in directions of the two perpendicular axes along which the measuring head moves, and the offset in a direction of the one axis along which the measuring head does not move; and

subsequently, measuring the workpiece by the measuring head by using the 3-dimensional offset of the measuring head itself.

There is provided a sixth method for measuring a workpiece by a laser beam by using a wired or wireless measuring head including a 3-dimensional offset, wherein the measuring head attached to a machine tool is capable of swiveling and moving relative to the workpiece along three perpendicular axes or two perpendicular axes, and a table is capable of swiveling about a swiveling center on the machine tool,

the method comprising steps of

acquiring respective offsets in directions of the two perpendicular axes along which the measuring head moves, independently by each of the procedures according to the second, third or fourth method, or by combination of a plurality of the procedures;

acquiring, by each of the procedures according to the third or fourth method, the offset in a direction of remaining one axis of the measuring head;

calculating the 3-dimensional offset of the measuring head, based on respective offsets in directions of the two perpendicular axes along which the measuring head moves, and an offset in a direction of the remaining one axis; and subsequently, measuring the workpiece by the measuring head by using the 3-dimensional offset of the measuring head itself.

There is provided a workpiece measuring apparatus on a machine tool for measuring the workpiece by using the measuring head by any one of the first to sixth methods.

The method and the apparatus for measuring a workpiece on a machine tool according to the present invention are configured as described above, and therefore can effectively use the measurement function intrinsic to the measuring head for measuring the workpiece to acquire the 3-dimensional offset of the measuring head itself and can measure the workpiece by using the measuring head, by simply installing a reference object such as a reference sphere at an arbitrary position, without separately using another measuring instrument such as a touch sensor or a dial gauge.

BRIEF DESCRIPTION OF THE DRAWINGS

FIGs. 1 to 9 illustrate a first embodiment of the present invention and FIG. 1 is a perspective view of a machine tool equipped with a workpiece measuring apparatus having a wired measuring head;

FIG. 2 is a perspective view of a machine tool equipped with a workpiece measuring apparatus having a wireless measuring head;

FIG. 3 is a schematic view illustrating a configuration of a non-contact measuring head;

FIG. 4 is a schematic view illustrating a configuration of a contact measuring head;

FIG. 5 is an explanatory diagram in which a reference sphere is measured before swiveling the measuring head;

FIG. 6 is an explanatory diagram in which the reference sphere is measured after swiveling the measuring head;

FIG. 7 is an explanatory diagram illustrating the relation between respective elements measured by the measuring head;

FIG. 8A is an explanatory diagram illustrating a method for acquiring a center point of a reference sphere;

FIG. 8B is an explanatory diagram illustrating another method for acquiring the center point of the reference sphere;

FIG. 8C illustrates the external view when the reference object is a multiangular pyramid;

FIG. 8D illustrates the external view when the reference object is a cuboid;

FIG. 9 is a flow chart illustrating a procedure of acquiring a 3-dimensional offset of the measuring head;

FIGs. 10 to 13 illustrate a second embodiment of the present invention and FIG. 10 is a perspective view of a machine tool equipped with a workpiece measuring apparatus having a wired measuring head;

FIG. 11 is a perspective view of the machine tool equipped with a workpiece measuring apparatus having a wireless measuring head;

FIGs. 12A and 12B are an explanatory diagram illustrating calculation of an offset along Y-axis with an inclination angle of a laser beam;

FIG. 13 is an explanatory diagram illustrating a means for acquiring the inclination angles of the laser beam.

FIGs. 14 to 19 illustrate a third embodiment of the present invention and FIG. 14 is a perspective view of a machine tool equipped with a workpiece measuring apparatus having a wired measuring head;

FIG. 15 is a perspective view of the machine tool equipped with a workpiece measuring apparatus having a wireless measuring head;

FIG. 16 is an explanatory diagram in which a reference sphere is measured before swiveling a table;

FIG. 17 is an explanatory diagram in which the reference sphere is measured after swiveling the table;

FIG. 18 is an explanatory diagram illustrating a method for acquiring a 3-dimensional offset of the measuring head; and

FIG. 19 is a flow chart illustrating a procedure of acquiring the 3-dimensional offset of the measuring head.

## DESCRIPTION OF THE PREFERRED EMBODIMENTS

With regard to machines tool 1, 1a and 101 in a method for measuring a workpiece according to the present invention, a wired or wireless measuring head 10, 10a and 10b attached to the machine tools 1, 1a and 101 is movable relative to a workpiece along three perpendicular axes or two perpendicular axes. In the measuring head 10, 10a and 10b, angle directions relative to the workpiece can be varied by one or more swivel spindles. The workpiece is then measured by the measuring head 10, 10a and 10b including a 3-dimensional offset R.

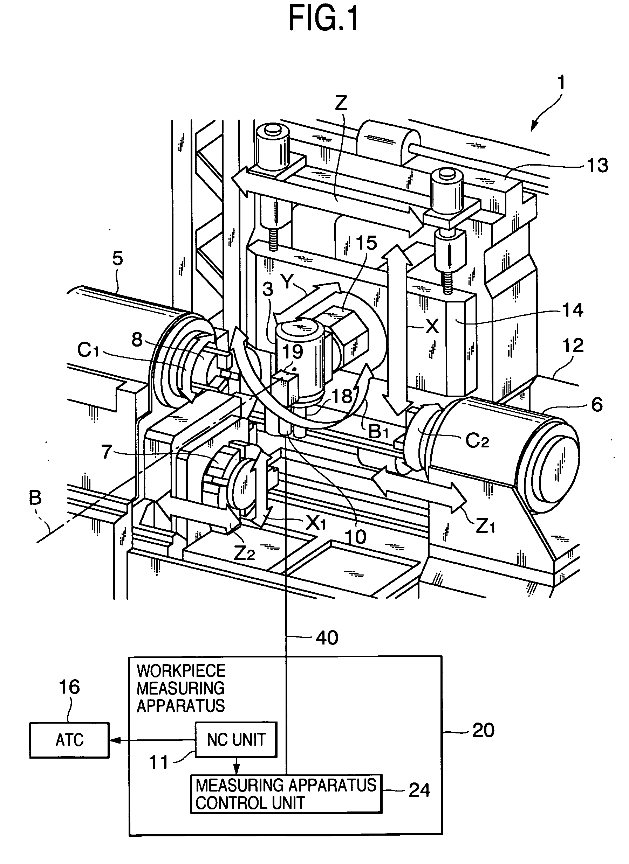

In this method, a reference object 30, 30a and 30b placed at an arbitrary position is measured for a plurality of times by the measuring head 10, 10a and 10b while the measuring head 10, 10a and 10b is varying the relative angle direction. The 3-dimensional offset R of the measuring head 10, 10a and 10b is calculated with variation of the measurement results, along the three perpendicular axes, measured from the relative angle directions. Subsequently, the workpiece is measured by the measuring head 10, 10a and 10b by using the 3-dimensional offset R of the measuring head 10, 10a and 10b itself (FIGs. 1 to 19).

Accordingly, the object of effectively using the measurement function intrinsic to the measuring head for measuring a workpiece to acquire the 3-dimensional offset of the measuring head itself and to measure the workpiece by the measuring head can be achieved without separately using another measuring instrument such as a touch sensor or a dial gauge.

In each the following embodiments, a case is shown in which the machine tool is a multi-axis turning center. The machine tool may also be a vertical machining center, a horizontal machining center, a lathe or a grinder.

(First embodiment)

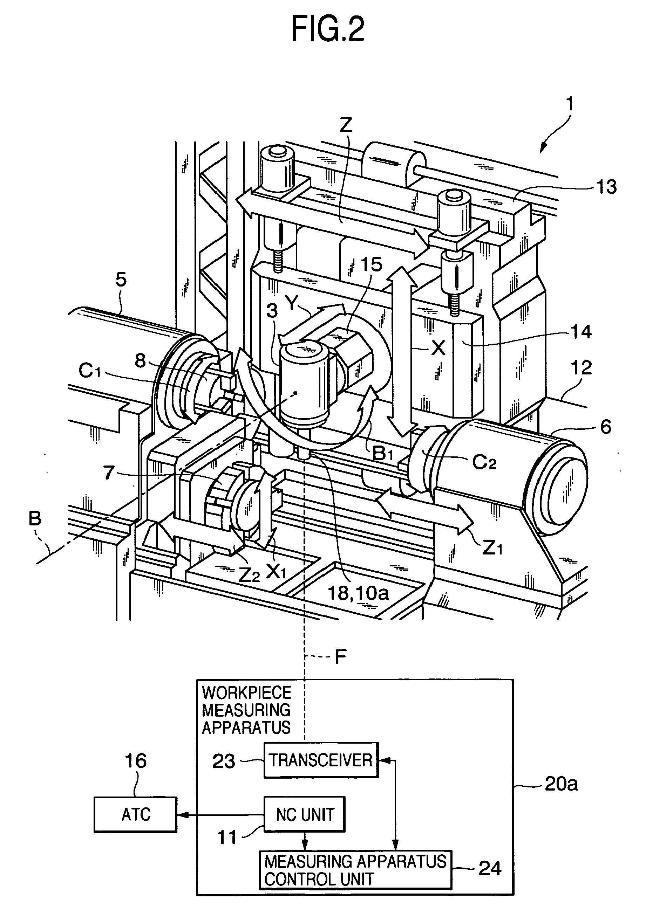

A first embodiment of the present invention will be described below, referring to FIGs. 1 to 9. FIG. 1 is a perspective view of a machine tool equipped with a workpiece measuring apparatus having a wired measuring head, and FIG. 2 is a perspective view of a machine tool equipped with a workpiece measuring apparatus having a wireless measuring head.

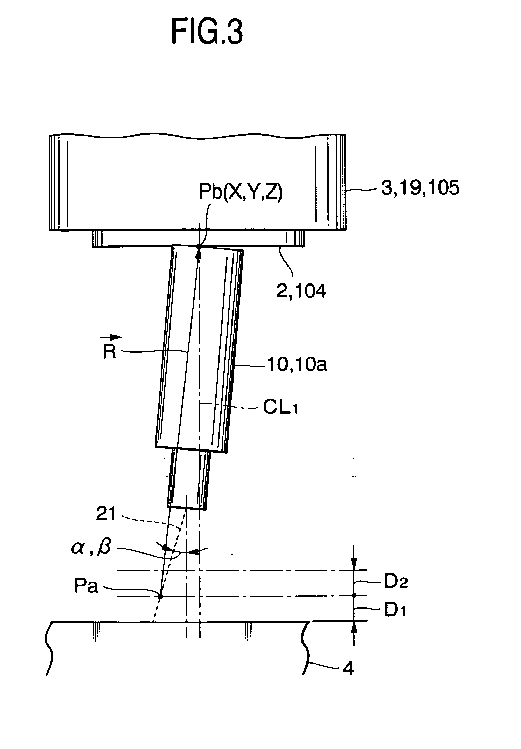

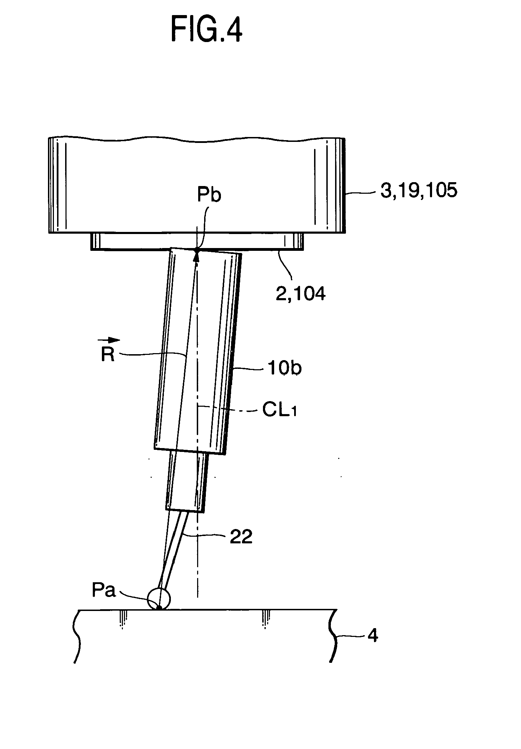

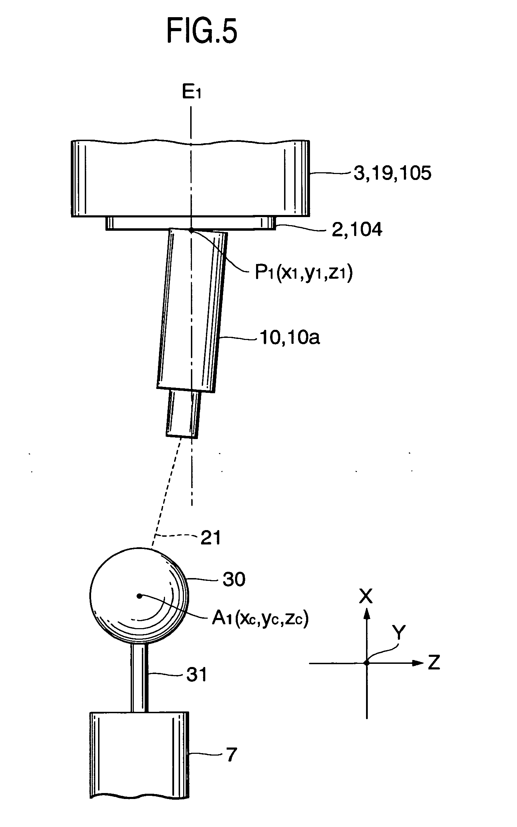

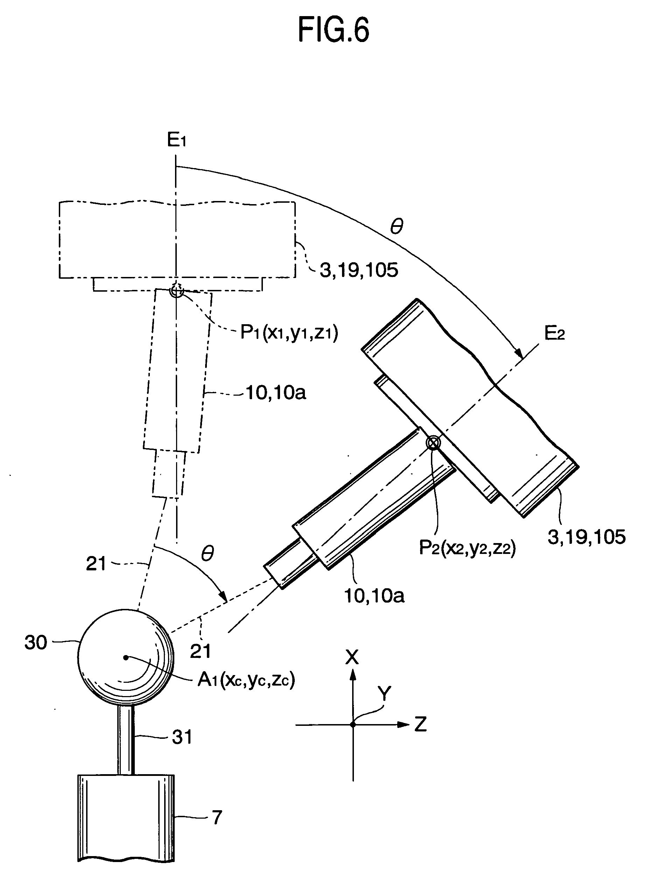

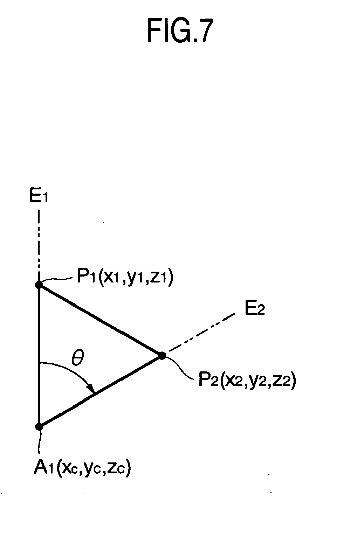

FIG. 3 is a schematic view illustrating a configuration of a non-contact measuring head, and FIG. 4 is a schematic view illustrating a configuration of a contact measuring head. FIG. 5 is an explanatory diagram in which a reference sphere is measured before swiveling the measuring head, FIG. 6 is an explanatory diagram in which the reference sphere is measured after swiveling the measuring head, and FIG. 7 is an explanatory diagram illustrating the relation between respective elements measured by the measuring head.

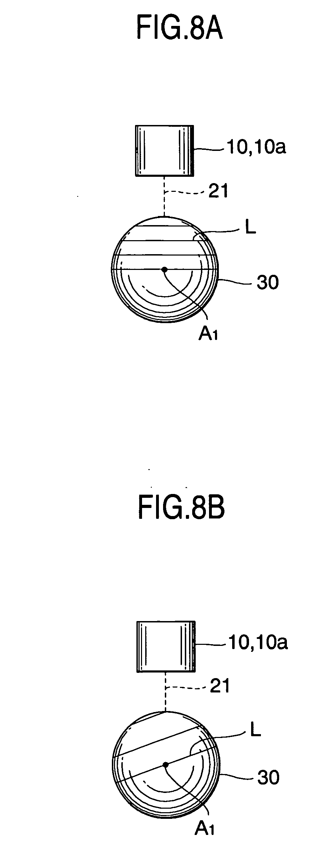

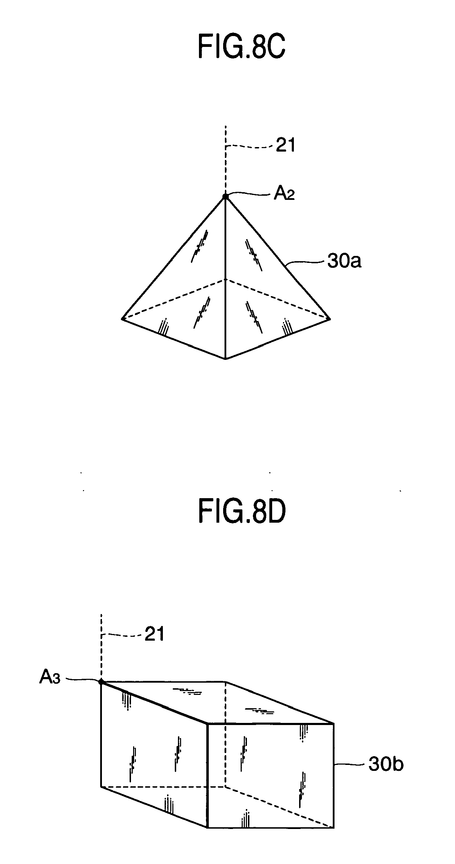

FIG. 8A is an explanatory diagram illustrating a method for acquiring the center point of the reference sphere, FIG. 8B is an explanatory diagram illustrating another method for acquiring the center point of the reference sphere, FIG. 8C illustrates the external view when the reference object is a multiangular pyramid, and FIG. 8D illustrates the external view when the reference object is a cuboid.

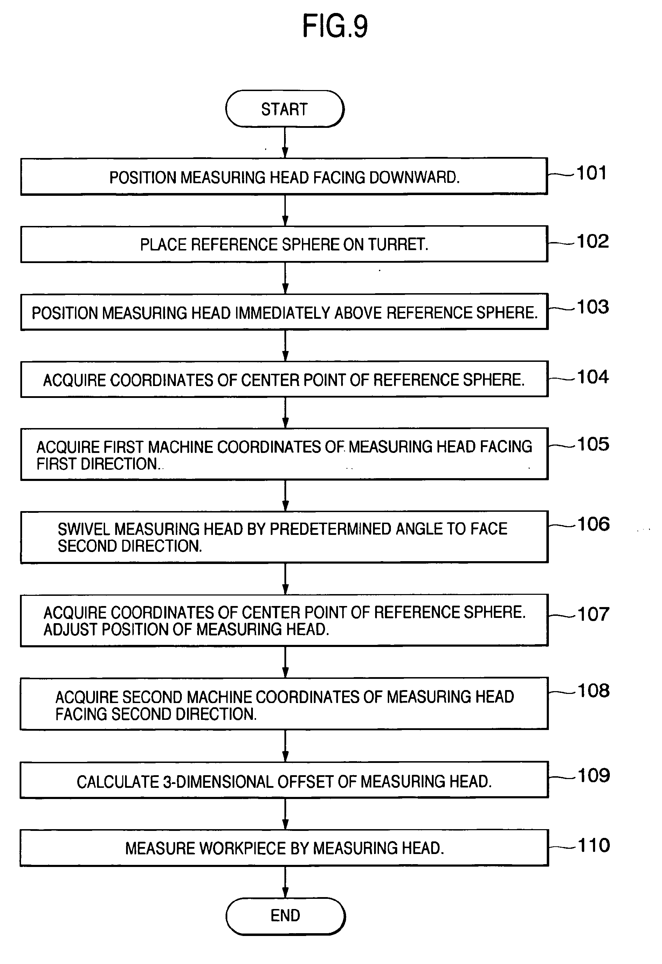

FIG. 9 is a flow chart illustrating a procedure of acquiring a 3-dimensional offset of the measuring head.

As shown in FIGs. 1 to 3, the present embodiment describes a case in which the machine tool 1 is a multi-axis turning center. The machine tool 1 comprises a tool rest 3, a headstock 5 supporting a workpiece 4, an auxiliary headstock (or tail stock) 6 supporting an end of the workpiece 4, and a turret 7.

A chuck 8 of the headstock 5 grips the workpiece 4 and rotationally drives it as shown by an arrow C1. The turret 7 has a plurality of tools attached thereto. A main spindle 2 mounted on the tool rest 3 has a tool 18 removably mounted thereon for turning or cutting the workpiece 4. The tool 18 is changed by an ATC (automatic tool changer) 16.

The tool 18 machines the workpiece 4 gripped to the chuck 8 of the headstock 5. There are several types of the tool 18 attached to the main spindle 2 such as a tool for turning or a rotating tool rotationally driven by the main spindle 2.

The machine tool 1 works as a lathe for turning the workpiece 4 by the tool 18 of the tool rest 3 or by the tools of the turret 7, and works as a machining center for cutting the workpiece 4 by the tool 18 of the tool rest 3.

When the machine tool 1 is used as a lathe, the workpiece 4 is rotated to be turned by the tool 18 while the tool 18 attached to the main spindle 2 does not rotate. Alternatively, the workpiece 4 is rotated to be turned by the tools attached to the turret 7.

When the machine tool 1 is used as a machining center, the tool 18 is rotated by the main spindle 2 to cut the workpiece 4 which is not rotating. In this occasion the tool rest 3 exhibits its functionality as a spindle head of the machining center.

The up and down, back and forth, and left and right directions seen from the front of the machine tool 1 are respectively defined as the X-, Y- and Z-axis directions. The mutually perpendicular X-, Y- and Z-axes compose the three perpendicular axes.

A Z-axis moving member 13 mounted on a machine body 12 of the machine tool 1 is driven by a Z-axis driving mechanism to move along the Z-axis. An X-axis moving member 14 mounted on the Z-axis moving member 13 is driven by an X-axis driving mechanism to move along the X-axis. A Y-axis moving member 15 mounted on the X-axis moving unit 14 is driven by a Y-axis driving mechanism to move along the Y-axis.

The auxiliary headstock 6 is installed to face the headstock 5 and is movable along a Z1-axis which is parallel to the Z-axis. The chuck of the auxiliary headstock 6 can grip and rotate the workpiece 4 as shown in arrow C2.

The turret 7 is movable along an X1-axis which is parallel to the X-axis and along a Z2-axis which is parallel to the Z-axis, respectively.

The machine tool 1 is controlled by a machine tool control unit comprising an NC (numerical control) unit 11 and a PLC (programmable logic controller).

The NC unit 11 controls the Z-axis driving mechanism, the X-axis driving mechanism and the Y-axis driving mechanism, respectively. The NC unit 11 controls the moving mechanism of the auxiliary headstock 6 and the moving mechanism of the turret 7, and an ATC 16 which automatically changes the tool 18 on the main spindle 2.

The tool rest 3, which is a movable unit, is mounted on the front of the Y-axis moving member 15. A wired measuring head 10 of a workpiece measuring apparatus 20 is attached to the tool rest 3 on the machine tool 1 shown in FIG. 1. With the machine tool 1 shown in FIG. 2, a wireless measuring head 10a of a workpiece measuring apparatus 20a can be attached to the tool rest 3.

As shown in FIGs. 1 and 2, the tool rest 3 is driven by the Z-axis moving member 13, the X-axis moving member 14 and the Y-axis moving member 15, respectively, and moves along the Z-axis, the X-axis and the Y-axis, respectively. The central axis of the Y-axis moving member 15, i.e. a B-axis is parallel to the Y-axis.

The tool 18 and the measuring head 10 and 10a attached to the tool rest 3 are driven by the Z-axis moving member 13, the X-axis moving member 14 and the Y-axis moving member 15, respectively, and move along the Z-axis, the X-axis and the Y-axis, respectively.

Thus, the tool 18 removably attached to main spindle 2 of the tool rest 3, and the measuring head 10 and 10a attached to the tool rest 3 are movable relative to the workpiece 4 along the three (or two) perpendicular axes. As shown by an arrow B1, the tool rest 3 can swivel about a B-axis for swiveling. Therefore, the measuring head 10 and 10a attached to the tool rest 3 can also swivel about the B-axis.

A housing 19 which receives the wired measuring head 10 is attached to the front of the tool rest 3 of the machine tool 1 shown in FIG. 1. The housing 19 supports the measuring head 10 so that the measuring head 10 can enter therein and exit therefrom.

The measuring head 10 protrudes downward from the housing 19 when the head 10 is used, and is retracted into the housing 19 when the head 10 is not used. The measuring head 10 measures the workpiece 4 in a state exposed downward from the housing 19. The housing 19 supporting the measuring head 10 may be installed at the side of the tool rest 3.

The workpiece measuring apparatus 20 shown in FIG. 1 comprises the NC unit 11 which controls the machine tool 1, the wired measuring head 10 attached to the tool rest 3 to measure the workpiece 4, and a measuring apparatus control unit (e.g., personal computer) 24 which controls the workpiece measuring apparatus 20.

The measuring head 10 attached to the tool rest 3 is electrically connected to the workpiece measuring apparatus 20 via a wiring 40. When the workpiece 4 is measured by the workpiece measuring apparatus 20, measurement instructions or data of the distance to the workpiece 4 are sent between the measuring head 10 of the tool rest 3 and the measuring apparatus control unit 24 by the wiring 40.

In the workpiece measuring apparatus 20, distance data measured by the measuring head 10 is output from the measuring head 10 to the measuring apparatus control unit 24 via the wiring 40. The NC unit 11 outputs position data of the measuring head 10 to the measuring apparatus control unit 24.

The measuring apparatus control unit 24 acquires 2-dimensional or 3-dimensional shape data of the workpiece 4 by performing a calculation based on the position data and the distance data. Accordingly, the workpiece measuring apparatus 20 can perform a 2-dimensional or 3-dimensional measurement of the workpiece 4.

When the workpiece 4 is measured on the machine tool 1 shown in FIG. 2, the wireless measuring head 10a is removably attached to the main spindle 2 of the tool rest 3. The NC unit 11 controls the ATC 16 which automatically changes the tool 18 and the measuring head 10a to the main spindle 2.

Therefore, the tool 18 or the measuring head 10a attached to the main spindle 2 of the tool rest 3 is driven by the Z-axis moving member 13, the X-axis moving member 14 and the Y-axis moving member 15, respectively, and moves along the Z-, X- and Y-axes, respectively.

The tool 18 and the measuring head 10a removably attached to the main spindle 2 of the tool rest 3 can move along the three perpendicular axes (or two perpendicular axes) relatively to the workpiece 4, and swivel about the B-axis, as shown by the arrow B1.

The workpiece measuring apparatus 20a shown in FIG. 2 comprises the NC unit 11, the wireless measuring head 10a removably attached to the main spindle 2 to measure the workpiece 4, a transceiver 23 which performs transmission and reception to and from the measuring head 10a, and the measuring apparatus control unit 24 which controls the workpiece measuring apparatus 20a.

When the workpiece 4 is measured by the workpiece measuring apparatus 20a, a signal F, which includes measurement instructions and the data of distance to the workpiece 4, is transmitted and received between the transceiver 23 and the measuring head 10a being attached to the main spindle 2 in a wireless manner

With regard to the workpiece measuring apparatus 20a, the signal F including the data measured by the measuring head 10a is transmitted to the transceiver 23 from the measuring head 10a in a wireless manner. The distance data with regard to the workpiece 4 received by the transceiver 23 from the measuring head 10a is output to the measuring apparatus control unit 24. The NC unit 11 outputs position data of the measuring head 10a to the measuring apparatus control unit 24.

The measuring apparatus control unit 24 acquires the 2-dimensional or 3-dimensional shape data of the workpiece 4 by performing a calculation based on the position data and the distance data. In this manner, the workpiece measuring apparatus 20a can perform a 2-dimentional or 3-dimensional measurement of the workpiece 4.

As shown in FIGs. 1 to 3, the workpiece measuring apparatus 20 and 20a on the machine tool 1 and the method for measuring the workpiece using the same can measure the workpiece 4 in a non-contact manner by the wired measuring head 10 (or the wireless measuring head 10a) attached to the tool rest 3 as a movable unit of the machine tool 1, by using a laser beam 21 (alternatively, a supersonic wave, heat or an electromagnetic wave, not shown).

The measuring head 10 and 10a has set therein a reference position Pa existing on the axis line of the laser beam 21, and intrinsic machine coordinates Pb located at an opposite direction of the laser beam 21. The reference position Pa for the measuring head 10 and 10a is a point at which the laser beam 21 generated by a laser oscillator is focused.

The laser beam 21 is irradiated and focused on the measured point on the surface of the workpiece 4 and then is reflected at the measured point when the measured point on the surface of the workpiece 4 is identical to the reference position Pa. The reflected laser beam 21 is converged as a ring-shaped image on the imaging side of a CCD [Charge Coupled Device] camera in the measuring head 10 and 10a.

The present invention can also be applied to a contact-type and wired (or wireless) measuring head 10b (FIG. 4), as well as the non-contact measuring head 10 and 10a described above. In other words, the measuring head of the present invention has one or both of the functions of measuring the workpiece 4 in a non-contact manner for using the laser beam 21, a supersonic wave, heat or an electromagnetic wave, and of measuring the workpiece in a contact manner by a contact 22 which contacts the workpiece 4.

When the measuring head is of a contact-type having the contact 22, the wired or wireless measuring head 10b attached to the machine tool causes the contact 22 to contact and measure the workpiece 4. With regard to the contact-type measuring head 10b, a position at which the end of the contact 22 contacts the workpiece 4 is the reference position Pa.

As shown in FIGs. 1 to 3, the measuring head 10 and 10a measures distances D1 and D2 to the workpiece 4, assuming that the distance at the reference position Pa is $\pm$ 0mm.

For example, if the workpiece 4 is separated from the reference position Pa downward by the distance D1, the measuring head 10 and 10a moves downward from the reference position Pa by the distance D1. As a result, the reference position Pa matches the surface of the workpiece 4, whereby the laser beam 21 is focused on the surface. Since the distance D1 to the workpiece 4 (e.g., D1= +5mm) is known from the movement of the measuring head, the position of the workpiece 4 on the surface is measured.

If, on the contrary, the workpiece 4 is separated from the reference position Pa upward by the distance D2, the measuring head 10 and 10a moves from the reference position Pa upward by the distance D2. The reference position Pa then matches the surface of the workpiece 4, whereby the laser beam 21 is focused on the surface. As a result, the distance D2 to the workpiece 4 (e.g., D2= -5mm) is known from the movement of the measuring head, and thus the position of the workpiece 4 on the surface is measured.

With regard to the measuring head 10 and 10a, it is ideal if an axis line CL1, passing through the intrinsic machine coordinates Pb, in parallel to the X-axis (vertical direction) is identical to the axis line direction of the laser beam 21 generated at the measuring head 10 and 10a.

However, it often happens that the axis line of the laser beam 21 inclines against the axis line CL1 being parallel to the X-axis due to errors which happen when the measuring head 10 and 10a is manufactured or assembled. For example, let us assume, with regard to the laser beam 21, that the laser beam 21 is inclined by an inclination angle $\alpha$ in an X, Z plane, and the laser beam 21 is inclined by an inclination angle $\beta$ in an X, Y plane.

As a result, the measuring head 10 and 10a includes a 3 (three)-dimensional offset R. The 3-dimensional offset R of the measuring head 10 and 10a is a vector having the length and direction between the coordinates of the measurement reference position Pa of the measuring head and the intrinsic machine coordinates of the measuring head (e.g., location of the end of the main spindle 2) Pb.

Therefore, when measuring the workpiece 4 by the measuring head 10 and 10a on the workpiece measuring apparatus 20 and 20a, the 3-dimensional offset R, which includes the orientation of the optical axis of the laser beam 21 and the length from the reference position (focal point of the laser beam 21) Pa on the optical axis to the intrinsic machine coordinates Pb of the measuring head 10 and 10a, is required to calculate the measurement result.

The workpiece 4 can therefore be measured by the measuring head 10 and 10a by using the 3-dimensional offset R of the measuring head 10 and 10a itself.

Next, a method for acquiring the 3-dimensional offset R of the measuring head 10 and 10a will be described.

As shown in FIGs. 1 to 9, the measuring head 10 and 10a is swiveled, together with the tool rest 3, by a predetermined angle θ. A reference sphere (i.e., standard ball) 30 which is a reference object placed at an arbitrary position is measured from a first direction E1 and a second direction E2, respectively, by the measuring head 10 and 10a. Accordingly, the coordinates (xc, yc, zc) of an intrinsic specific point (here, a center point A1) of the reference object (reference sphere 30) is acquired from the NC unit 11.

Next, first machine coordinates P1 (x1, y1, z1) of the measuring head 10 and 10a at the time when the measuring head 10 and 10a measured the specific point (the center point A1) of the reference object (the reference sphere 30) from the first direction E1 are acquired from the NC unit 11. In addition, second machine coordinates P2 (x2, y2, z2) of the measuring head 10 and 10a at the time when the measuring head 10 and 10a measured the specific point (the center point A1) of the reference object (the reference sphere 30) from the second direction E2 are acquired from the NC unit 11.

Based on the first machine coordinates P1 (x1, y1, z1) and the second machine coordinates P2 (x2, y2, z2), the 3-dimensional offset R of the measuring head 10 and 10a is calculated.

Subsequently, the workpiece measuring apparatus 20 and 20a measures the workpiece 4 by the measuring head 10 and 10a by using the 3-dimensional offset R of the measuring head 10 and 10a itself.

The procedure of acquiring the 3-dimensional offset R of the measuring head 10 and 10a will be described in detail below.

First, the tool rest 3 is oriented to the X-axis, whereby the measuring head 10 and 10a is positioned for facing downward (step 101).

The turret 7 (or the chuck 8 of the headstock 5) is positioned in a non-rotating state and at a predetermined position. In this state, the reference sphere 30 is temporarily placed on the turret 7 (or the chuck 8 of the headstock 5) via a supporting member 31 (step 102).

In this occasion, it is not necessity to attach the supporting member 31 and the reference sphere 30 at a given position which is preliminarily determined with a high precision and it suffices to attach them at an arbitrary position. It is preferred that a part or all of the supporting member 31 is made of a permanent magnet, because the supporting member 31 and the reference sphere 30 can thereby be easily attached to and removed from the turret 7.

A case is shown in which the reference sphere 30 having a center point A1 is the reference object (FIGs. 8A and 8B). Here, the reference object may be a multiangular pyramid 30a (FIG. 8C) such as a triangular pyramid or a quadrangular pyramid having an apex A2 as the specific point, or a cuboid 30b having an apex A3 as the intrinsic specific point (FIG. 8D).

After the reference sphere 30 has positioned to the turret 7, the tool rest 3 manually moves to position the measuring head 10 and 10a immediately above the reference sphere 30. As a result, the measuring head 10 and 10a swivels downward to face the reference sphere 30 (step 103).

The measuring head 10 and 10a then acquires the coordinates of the center point A1 of the reference sphere 30 (step 104). In this case, as shown in FIG. 8A, a plurality of positions of the profile of the reference sphere 30 are respectively measured by the laser beam 21, and the coordinates of the center point A1 are acquired from the points obtained by each measurement by using the least square method.

Alternatively, as another method for acquiring the coordinates of the center point A1, a number of points on the outer periphery of the reference sphere 30 are respectively measured in a helical manner, as shown in FIG. 8B. The coordinates of the center point A1 can be obtained from a number of points acquired by the measurement by the least square method.

The line L in FIGs. 8A and 8B indicates the trajectory of the laser beam 21 for scanning the surface of the reference sphere 30 when measuring by the laser beam 21.

Generally, the following calculation can be performed by the least square method. The coordinates (xc, yc, zc) and radius r of the center point A1 of the reference sphere 30 are calculated with m sets of coordinates x, y, z. An equation of the ball (reference sphere 30) is given as follows:

$$(x - xc)^2 + (y - yc)^2 + (z - zc)^2 = r^2 \ \ldots\ldots\ (1)$$

Coefficients a, b, c and d are used as in the following equation.

$$xc = -a/2 \qquad \ldots\ldots\ (2)$$

$$yc = -b/2 \qquad \ldots\ldots\ (3)$$

$$zc = -c/2 \qquad \ldots\ldots\ (4)$$

$$r = SQRT\ [(a^2 + b^2 + c^2)/4 - d] \qquad \ldots\ldots\ (5)$$

The equation of the ball is then expressed by the following equation.

$$(x^2 + y^2 + z^2) + ax + by + cz + d = 0 \quad \ldots\ldots\ (6)$$

As known in mathematical analysis, the partial derivative for each variable must be 0 (zero).

$$\partial J/\partial a = \Sigma\ [(x^2 + y^2 + z^2) + ax + by + cz + d] \times (x) = 0 \ \ldots\ldots\ (7)$$

$$\partial J/\partial b = \Sigma\ [(x^2 + y^2 + z^2) + ax + by + cz + d] \times (y) = 0 \ \ldots\ldots\ (8)$$

$$\partial J/\partial c = \Sigma \; [(x^2 + y^2 + z^2) + ax + by + cz + d] \times (z) = 0 \quad \text{......} \; (9)$$

$$\partial J/\partial d = \Sigma \; [(x^2 + y^2 + z^2) + ax + by + cz + d] \times (1) = 0 \quad \text{......} \; (10)$$

The following equation is obtained from the above equations.

$$\begin{vmatrix} \Sigma x^2 & \Sigma xy & \Sigma zx & \Sigma x \\ \Sigma xy & \Sigma y^2 & \Sigma zy & \Sigma y \\ \Sigma zx & \Sigma yz & \Sigma z^2 & \Sigma z \\ \Sigma x & \Sigma y & \Sigma z & n \end{vmatrix} \begin{vmatrix} a \\ b \\ c \\ d \end{vmatrix} = \begin{vmatrix} -\Sigma (x^2+y^2+z^2)x \\ -\Sigma (x^2+y^2+z^2)y \\ -\Sigma (x^2+y^2+z^2)z \\ -\Sigma (x^2+y^2+z^2) \end{vmatrix}$$

An inverse matrix is multiplied to calculate the values of the coefficients a, b, c and d, which are then substituted to the following equations to calculate the coordinates (xc, yc, zc) and radius r of the center point A1 of the reference sphere 30.

$$xc = -a/2 \qquad \text{......} \; (11)$$

$$yc = -b/2 \qquad \text{......} \; (12)$$

$$zc = -c/2 \qquad \text{......} \; (13)$$

$$r = SQRT \; [(a^2 + b^2 + c^2)/4 - d] \quad \text{......} \; (14)$$

The first machine coordinates P1 (x1, y1, z1) of the measuring head 10 and 10a at the time, when the measuring head 10 and 10a facing the first direction E1 measured the center point A1 of the reference sphere 30 from the first direction E1, are acquired from the NC unit 11 (step 105).

In FIGs. 1 to 7, the tool rest 3 is swiveled about the B-axis and moves along the X-axis and the Z-axis. Accordingly, the measuring head 10 and 10a swivels about the center point A1 of the reference sphere 30 by a predetermined angle θ. As a result, the measuring head 10 and 10a faces the second direction E2 (step 106).

In this state, the coordinates (xc, yc, zc) of the center point A1 of the reference sphere 30 are acquired by the same method as that which measured from the first direction E1. The position of the measuring head 10 and 10a is thus adjusted so that the coordinates (xc, yc, zc) of the center point A1 of the reference sphere 30 acquired from the second direction E2 are identical to the coordinates of the center point A1 of the reference sphere 30 acquired from the first direction E1 (step 107).

Subsequently, the second machine coordinates P2 (x2, y2, z2) of the measuring head 10 and 10a at the time, when the measuring head 10 and 10a facing the second direction E2 measured the center point A1 of the reference sphere 30 from the second direction E2, are acquired from the NC unit 11 (step 108).

By using the first machine coordinates P1 and the second machine coordinates P2 of the measuring head 10 and 10a thus acquired, the 3-dimensional offset R of the measuring head 10 and 10a is calculated by the following equation in this manner.

$$\vec{R} = (\vec{P_2} - \vec{P_1}) \times \cos(\theta/2)/\sin\theta$$

The first machine coordinates P1 (x1, y1, z1), the second machine coordinates P2 (x2, y2, z2) and the swivel angle θ of the measuring head 10 and 10a are known for the center point A1 (xc, yc, zc) of the reference sphere 30 (FIG. 7).

Therefore, the 3-dimensional offset R of the measuring head 10 and 10a can be acquired, if the Z-component Rz, X-component Rx and Y-component Ry are known. The Z-component Rz, X-component Rx and Y-component Ry can be respectively calculated by the following equation.

$$Rz = [-(x1 - x2) \times \sin\theta - (z1 - z2) \times (\cos\theta - 1)]/(2 - 2 \times \cos\theta)$$

$$\cdots\cdots (15)$$

$$Rx = [z1 - z2 + Rz \times (\cos\theta - 1)]/\sin\theta \quad \cdots\cdots (16)$$

$$Ry = 0 \qquad\qquad \cdots\cdots (17)$$

Based on the Z-component Rz, X-component Rx and Y-component Ry of the 3-dimensional offset R of the measuring head 10 and 10a thus calculated, the 3-dimensional offset R of the measuring head 10 and 10a can be calculated (step 109).

Subsequently, the workpiece 4 can be measured by the measuring head 10 and 10a by using the 3-dimensional offset R of the measuring head 10 and 10a itself thus calculated (step 110).

(Second embodiment)

A second embodiment of the present invention will be described referring to FIGs. 3 to 6, and 10 to 13.

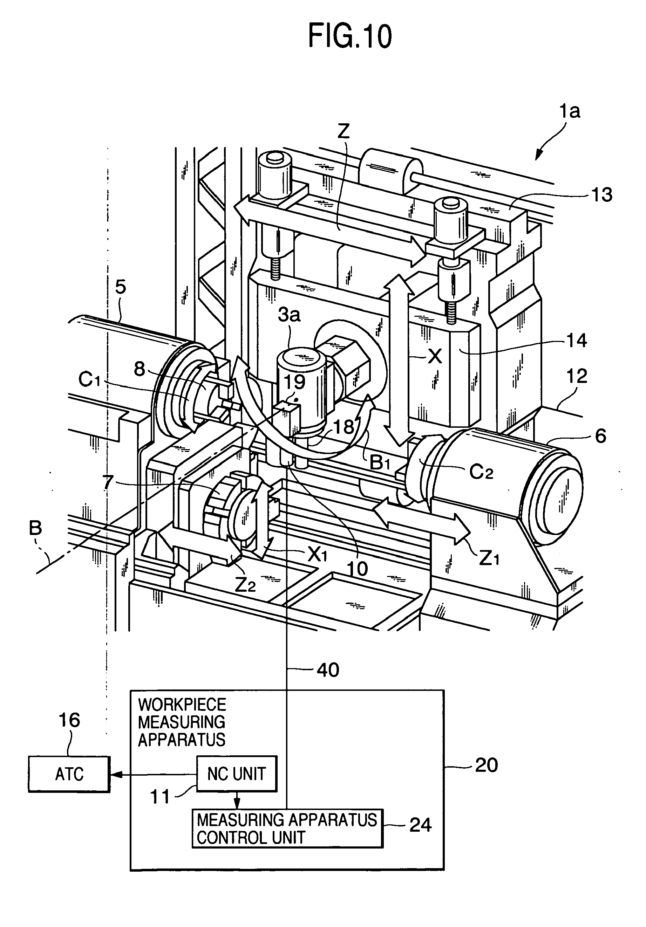

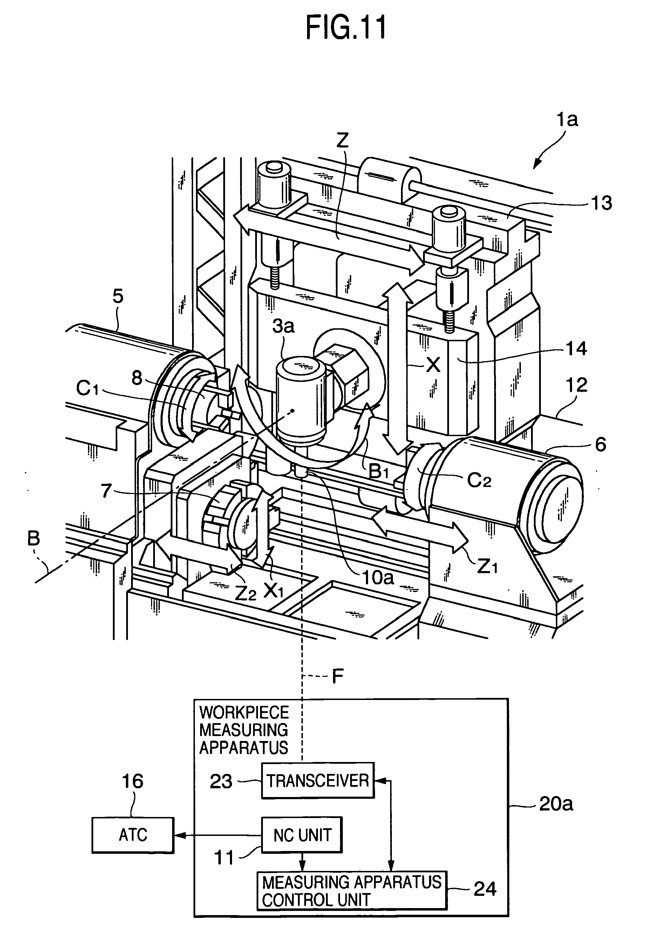

FIG. 10 is a perspective view of a machine tool 1a equipped with the workpiece measuring apparatus 20 having the wired measuring head 10, and FIG. 11 is a perspective view of the machine tool 1a equipped with the workpiece measuring apparatus 20a having the wireless measuring head 10a.

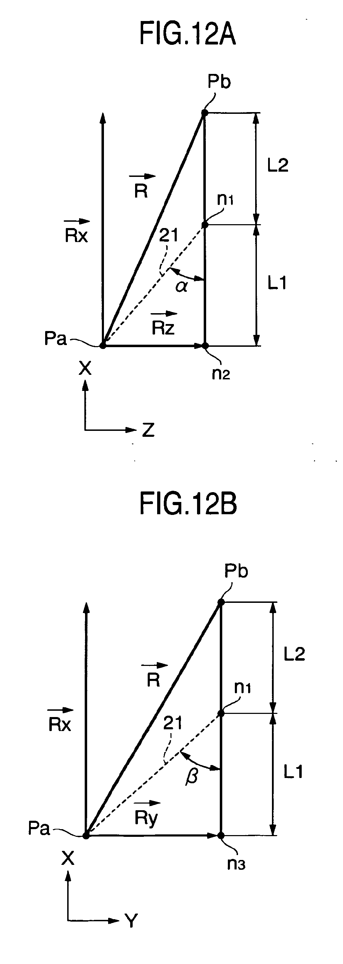

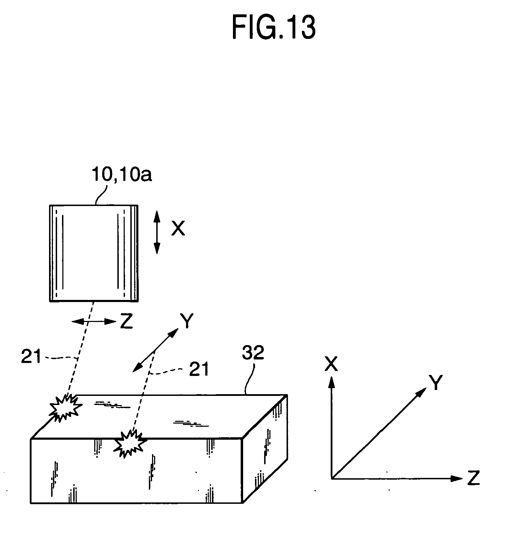

FIGs. 12A and 12B are explanatory diagrams illustrating calculation of the offset (Y-component) Ry along the Y-axis with the inclination angles α and β of the laser beam 21, and FIG. 13 is an explanatory diagram illustrating a means for acquiring the inclination angles α and β of the laser beam 21.

Here, identical reference numerals are provided to components which are identical or equivalent to the first embodiment omitting description thereof, and only the different parts are explained.

The machine tool 1a shown in FIGs. 10 and 11 has the same configuration as the machine tool 1 of the first embodiment except that the tool rest 3a does not move along the Y-axis.

The machine tool 1a has the wired measuring head 10 (or the wireless measuring head 10a) attached to the tool rest 3a which is a movable unit.

The measuring head 10 and 10a is movable relative to the workpiece 4 along two axes (X-and Z-axes) of the three perpendicular axes (X-, Y- and Z-axes) except for the one axis (Y-axis, i.e., back and forth) along which the measuring head 10 and 10a does not move. Additionally, as shown by the arrow B1, the measuring head 10 and 10a can swivel about the B-axis.

The measuring head 10 and 10a, which includes the 3-dimensional offset R, measures the workpiece 4 by the laser beam 21. The wired measuring head 10, which is supported to the housing 19 attached to the tool rest 3a, can enter therein and exit therefrom. The measuring head 10 is electrically connected by the wiring 40 (FIG. 10). The wireless measuring head 10a is removably attached to the main spindle 2 of the tool rest 3a (FIG. 11).

As shown in FIGs. 5 and 6, and 10 to 13, the measuring head 10 and 10a is swiveled together with the tool rest 3a by a predetermined angle θ in order to acquire the 3-dimensional offset R of the measuring head 10 and 10a.

A reference object (the reference sphere 30) placed at an arbitrary position is then measured by the measuring head 10 and 10a from the first direction E1 and the second direction E2, respectively. Accordingly, the coordinates (xc, yc, zc) of the intrinsic specific point (the center point A1) of the reference object (the reference sphere 30) are acquired from the NC unit 11.

Subsequently, the first machine coordinates P1 (x1, y1, z1) of the measuring head 10 and 10a at the time, when the measuring head 10 and 10a measured the specific point (the center point A1) of the reference object (the reference sphere 30) from the first direction E1, are acquired from the NC unit 11.

The second machine coordinates P2 (x2, y2, z2) of the measuring head 10 and 10a at the time, when the measuring head 10 and 10a measured the specific point (the center point A1) of the reference object (the reference sphere 30) from the second direction E2, are acquired from the NC unit 11.

The offsets Rx and Rz in the directions of the two perpendicular axes (X- and Z-axes), along which the measuring head 10 and 10a moves, are acquired from the first machine coordinates P1 (x1, y1, z1) and the second machine coordinates P2 (x2, y2, z2) of the measuring head 10 and 10a.

In this manner, the X-component Rx and the Z-component Rz of the 3-dimensional offset R can be calculated by the same method as that in the first embodiment.

Subsequently, the inclination angles α and β of the laser beam 21 are acquired by a predetermined means. In this case, the inclination angle α of the laser beam 21 on the X, Z plane, and the inclination angle β of the laser beam 21 on the X, Y plane are calculated by the method described in United States Patent No. US 06,199,024, for example.

Alternatively, there is a method for performing the following procedures 1 to 5 shown in FIG. 13.

(Procedure 1): First, a block gauge 32 is tentatively positioned on the upper part of the turret 7, for example. The measuring head 10 and 10a is then fixed at an arbitrary position along the Z-axis, and scans along the X-axis direction to record the X-component of positions at which edges of the block gauge 32 are detected.

(Procedure 2): In procedure 1, the measuring head 10 and 10a scans in both plus and minus directions with regard to the X-axis, and obtains the average value of the positions at which edges of the block gauge 32 are detected.

(Procedure 3): Move the measuring head 10 and 10a to a next arbitrary position along the Z-axis to perform the procedures 2 and 3.

(Procedure 4): Calculate the inclination angle α (i.e., inclination angle α on the X, Z plane) of the laser beam 21 against the X-axis, according to the edge detection position of the block gauge 32 acquired in the procedures 1 to 3.

(Procedure 5): Calculate the inclination angle β (i.e., inclination angle β on the X, Y plane) of the laser beam 21 against the Y-axis by the operations of the procedures 1 to 4.

The inclination angles α and β of the laser beam 21 thus be acquired.

The offset Ry in the direction of the one axis (Y-axis) along which the measuring head 10 and 10a does not move is calculated with the inclination angles degree α and β of the laser beam 21.

In this case, the offset along the X-axis (i.e., X-component Rx) and the offset along the Z-axis (i.e., Z-component Rz) of the measuring head 10 and 10a, and the inclination angles α and β of the laser beam 21 are already calculated in FIGs. 12A and 12B.

Therefore, as shown in FIG. 12A, an intersection point n1 exists between a position n2 of the end of the Z-component Rz from the reference position Pa and the machine coordinates Pb. Therefore, the distance L1 from the intersection point n1 to the position n2 and the distance L2 from the intersection point n1 to the machine coordinates Pb are calculated.

As shown in FIG. 12B, the distances L1 and L2, the X-component Rx, and the inclination angle β of the laser beam 21 are already acquired. Therefore, the offset along the Y-axis (i.e., Y-component Ry) for the measuring head 10 and 10a can be calculated.

The Y-component Ry can be calculated with the Z-component Rz and the inclination angles α and β according to the following equation.

$$Ry = (Rz/\tan\alpha) \times \tan\beta \quad \ldots\ldots \quad (18)$$

As a result, the 3-dimensional offset R of the measuring head 10 and 10a can be calculated, based on the offsets Rx and Rz in the directions of the two perpendicular axes (X- and Z-axes) along which the measuring head 10 and 10a moves, and based on the offset Ry in the direction of the axis (Y-axis) along which the measuring head 10 and 10a does not move.

Subsequently, the measuring head 10 and 10a measures the workpiece 4, by using the 3-dimensional offset R of the measuring head 10 and 10a itself.

In this embodiment, the 3-dimensional offset R of the measuring head 10 and 10a can be calculated even if the measuring head 10 and 10a does not move along one axis (here, Y-axis) of the three perpendicular axes.

With the machine tools 1 and 1a of the first and second embodiments, the workpiece 4 is gripped and rotated by the chuck 8 of the headstock 5, or is supported in a non-rotating state. As an exemplary variation thereof, a table may be provided below the tool rest 3 and 3a which can swivel, and the workpiece 4 may be attached to this table.

(Third embodiment)

A third embodiment of the present invention will be described, referring to FIGs. 3 and 14 to 19.

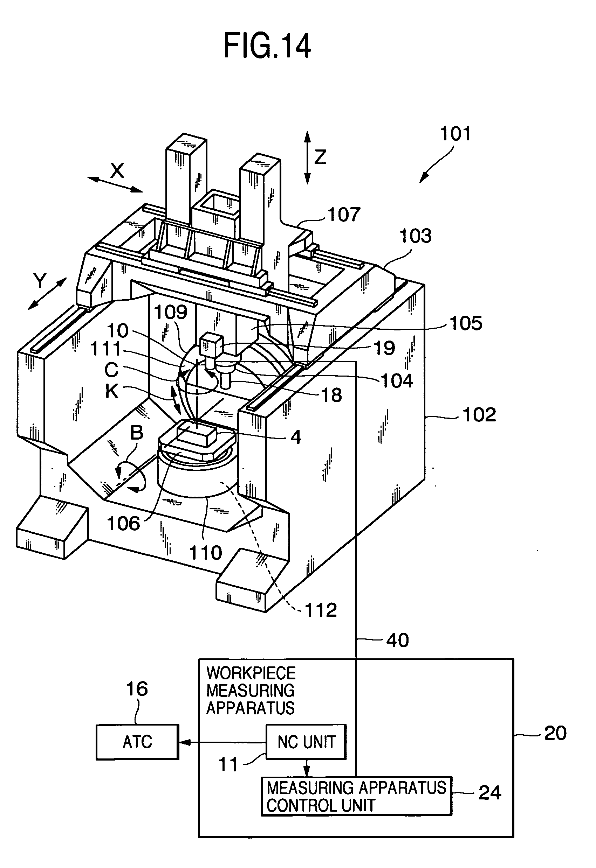

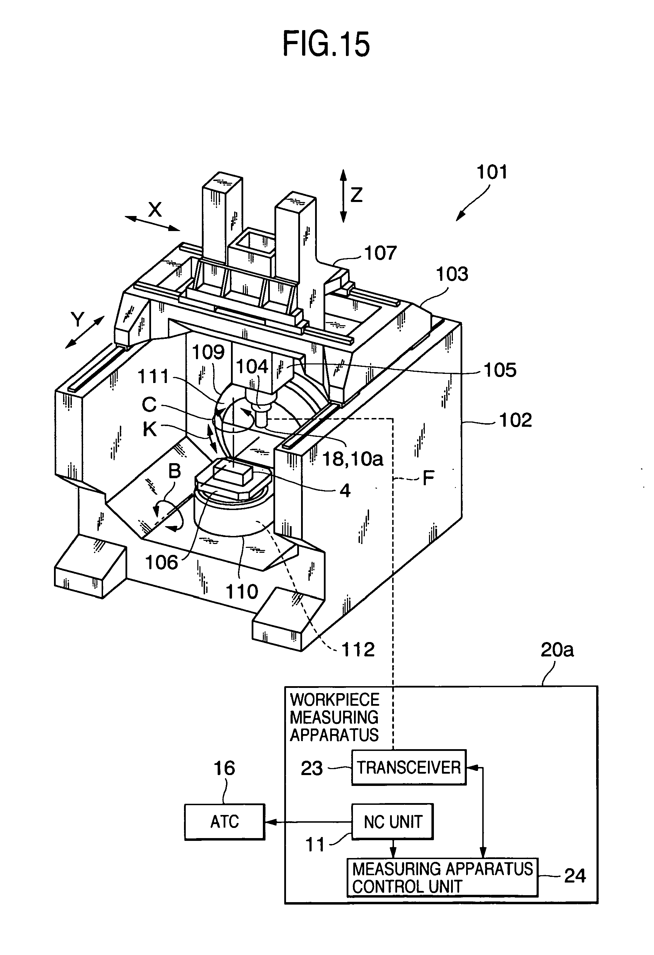

FIG. 14 is a perspective view of a machine tool 101 equipped with the workpiece measuring apparatus 20 having the wired measuring head 10, and FIG. 15 is a perspective view of the machine tool 101 equipped with the workpiece measuring apparatus 20a having the wireless measuring head 10a.

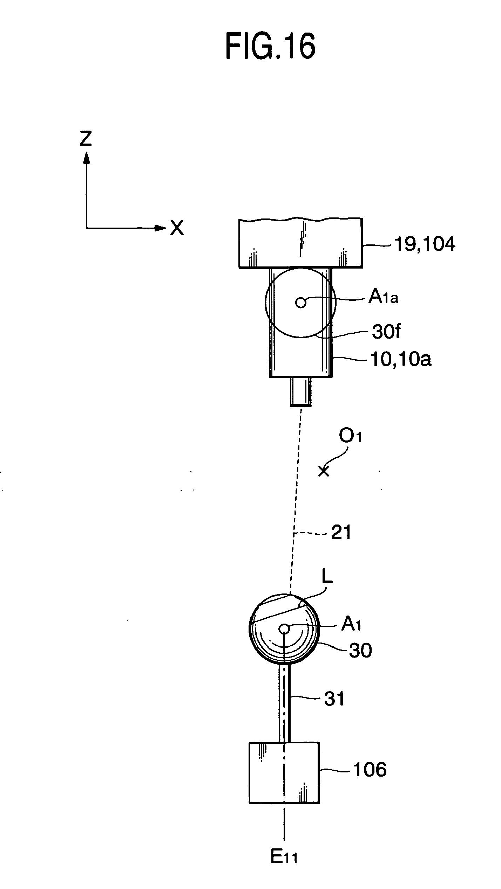

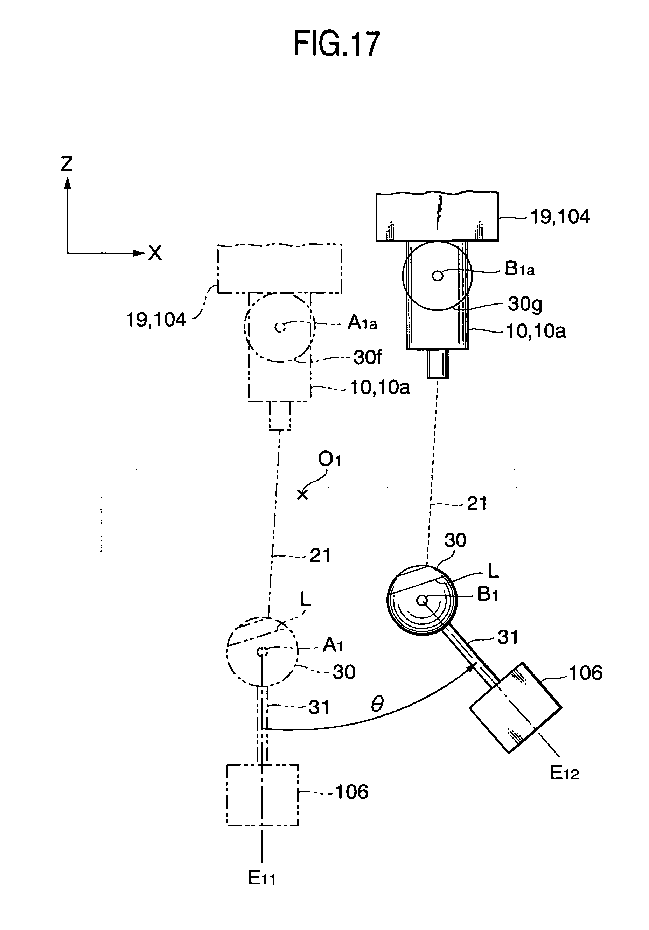

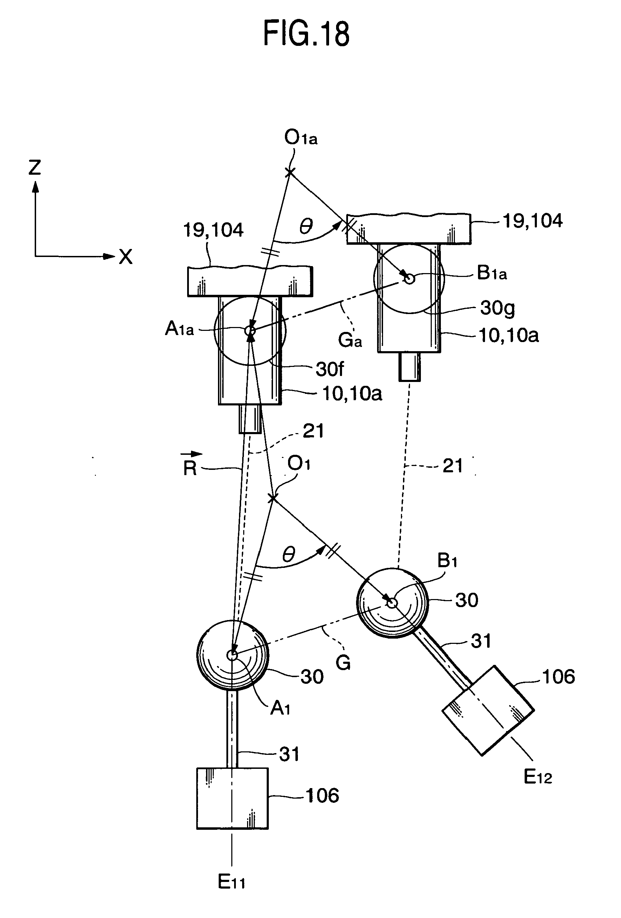

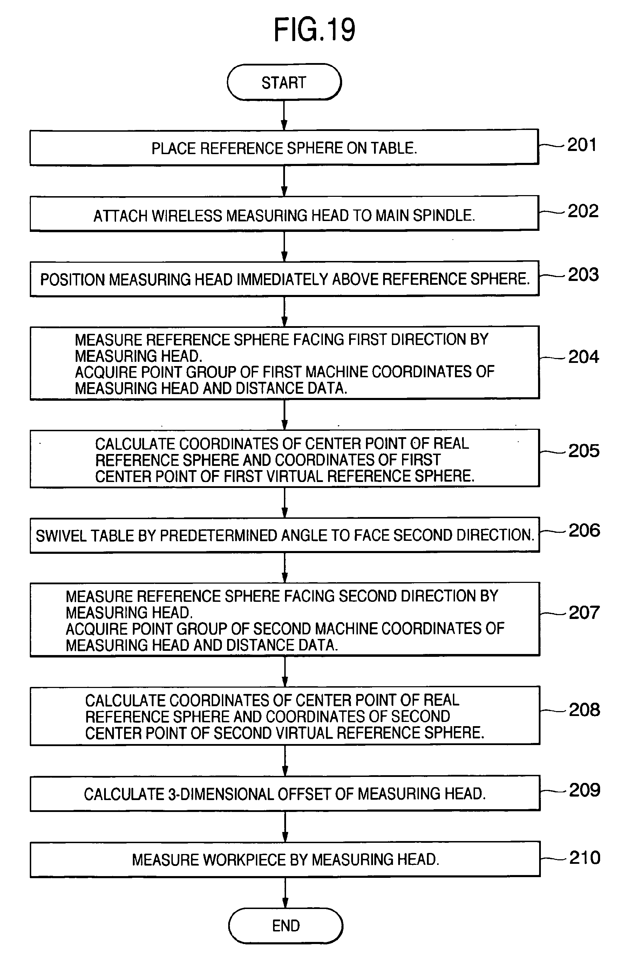

FIG. 16 is an explanatory diagram in which the reference sphere 30 is measured before swiveling a table 106, FIG. 17 is an explanatory diagram in which the reference sphere 30 is measured after swiveling the table 106, FIG. 18 is an explanatory diagram illustrating a method for acquiring the 3-dimensional offset R (Rx, Ry, Rz) of the measuring head 10 and 10a, and FIG. 19 is a flow chart illustrating a procedure of acquiring the 3-dimensional offset R of the measuring head 10 and 10a.

Here, identical reference numerals are provided to components which are identical or equivalent to the first and second embodiments omitting description thereof, and only the different parts are explained.

In FIGs. 3, and 14 to 19, the table 106 of the machine tool 101 can swivel about a center axis (the B-axis) for swiveling. The machine tool 101 is a five-axis turning center based on a five-axis controlled vertical machining center, and is a multi-axis turning center capable of turning and cutting the workpiece 4. Although the machine tool 101 is based on a vertical machining center, the present invention can also be applied to a horizontal machining center on which the table swivels.

A spindle head 105 as a movable unit on the machine tool 101 has the wired measuring head 10, attached to the spindle head 105, which is electrically connected by the wiring 40. The wired measuring head 10 is supported to the housing 19 attached to the spindle head 105 so that the measuring head 10 can enter therein and exit therefrom (FIG. 14).

The wireless measuring head 10a is removably attached to a main spindle 104 of the spindle head 105 (FIG. 15).

The measuring head 10 and 10a attached to the spindle head 105, which can measure the workpiece 4 attached to the table 106 by the laser beam 21, includes the 3-dimensional offset R.

The five-axis controlled machine tool 101 performs three-axis control which linearly moves the measuring head 10 and 10a and the workpiece 4 relatively along the three perpendicular axes (i.e., the X-, Y- and Z-axes). The machine tool 101 performs at least one-axis control (two-axis control composed of the B-axis control and the C-axis control, in this example) which swivels the measuring head 10 and 10a and the workpiece 4 relatively to index them.

The machine tool 101 comprises a base 102, a column103 mounted on the base 102, a cross rail 107 mounted on the column103, and the spindle head 105. The spindle head 105 is attached to the cross rail 107 and has the main spindle 104. The machine tool 101 is controlled by the NC unit 11.

The column 103 is placed on the base 102 and can move back and forth horizontally (along the Y-axis). The cross rail 107 is placed on the column 103 and can move left and right horizontally (along the X-axis). The spindle head 105 is supported by the cross rail 107 and can move up and down (along the Z-axis). The three perpendicular axes are composed by the X-, Y- and Z-axes, which perpendicular to each other.

The main spindle 104 has the tool 18 removably attached thereto. The main spindle 104 is supported by the spindle head 105 and can rotate about a central axis which is parallel to the Z-axis.

The column 103 mounted on the base 102 is driven by a Y-axis feed mechanism to move along the Y-axis. The cross rail 107 mounted on the column 103 is driven by an X-axis feed mechanism to move along the X-axis. The spindle head 105 supported by the cross rail 107 is driven by a Z-axis feed mechanism to move along the Z-axis.

Accordingly, the measuring head 10 and 10a linearly moves along the three perpendicular axes (i.e., the X-, Y- and Z-axes) relatively to the workpiece 4.

The table 106 of the machine tool 101 can be swiveled about a swiveling center (center for swiveling) O1 by B-axis control, and can be rotated by C-axis control. The table 106 can swivel the workpiece 4 relatively to the measuring head 10 and 10a by B-axis control and C-axis control, and can index the workpiece 4. The B-axis is parallel to the Y-axis, and the C-axis is the center for rotating the table 106.

The base 102 has a swivel board 109 which swivels by B-axis control mounted thereon as shown by an arrow K. The swivel board 109 has a table support platform 110, which is fixed on the swivel board 109, for protruding forward therefrom to support the table 106.

A table driving device comprises a B-axis driving unit 111 for swiveling the table 106 by B-axis control and a C-axis driving unit 112 for rotating the table 106 by C-axis control.

Driving the B-axis driving unit 111 swivels the swivel board 109, the table support platform 110, the table 106 and the workpiece 4 by B-axis control, and indexes them at predetermined positions.

Driving the C-axis driving unit 112 rotates and indexes the table 106 having the workpiece 4 attached thereto by a desired angle by C-axis control, and can continuously rotate the table 106 as well.

In the case of turning, driving the C-axis driving unit 112 causes the table 106 and the workpiece 4 to be rotated by C-axis control. In this manner, the workpiece 4 is rotated at predetermined rotational speeds by C-axis control while the workpiece 4 is placed on the table 106. Accordingly, the workpiece 4 is turned by the tool 18 attached to the main spindle 104.

On the other hand, in the case of cutting by the rotating tool 18 attached to the main spindle 104, the C-axis driving unit 112 is controlled to index the workpiece 4 on the table 106 at a predetermined position by C-axis control. In this state, the workpiece 4 placed on the table 106 is cut by the rotating tool 18 of the main spindle 104.

The workpiece measuring apparatus 20 and 20a mounted on the machine tool 101 has the same configuration as the workpiece measuring apparatus 20 and 20a mounted on the machine tool 1 according to the first embodiment and the machine tool 1a according to the second embodiment.

The workpiece measuring apparatus 20 and 20a and the method for measuring a workpiece using the same can measure the workpiece 4 in a non-contact manner by the measuring head 10 and 10a attached to the spindle head 105, by using one of a laser beam, a supersonic wave, heat and an electromagnetic wave.

Next, a method for measuring the workpiece 4 attached to the table 106 by the laser beam 21 by using the measuring head 10 and 10a including the 3-dimensional offset R will be described.

When the workpiece 4 is measured by the measuring head 10 and 10a, the orientation of the optical axis of the laser beam 21 and the 3-dimensional offset R, from the reference position (focal point of the laser beam 21) Pa placed on the optical axis to the intrinsic machine coordinates Pb (e.g., end of the main spindle 104) of the measuring head 10 and 10a, are required to calculate the measurement result.

It is therefore necessary to acquire the 3-dimensional offset R (a vector R) of the measuring head 10 and 10a attached to the spindle head 105. Accordingly, first, a reference object (here, reference sphere 30) having an intrinsic specific point (here, center point A1) is placed at an arbitrary position on the table 106 via the supporting member 31.

Subsequently, the reference object (reference sphere 30) on the table 106 facing the first direction E11 is measured by the measuring head 10 and 10a. In other words, the reference sphere 30 is measured by irradiating the laser beam 21 on the reference sphere 30 from the measuring head 10 and 10a and by scanning the laser beam 21 as indicated by the trajectory L.

In this manner, a group of points (i.e., point group) of the first machine coordinates Pb of the measuring head 10 and 10a, and distance data from the reference position Pa which is the focal point of the laser beam 21 are acquired (FIG. 3).

From the acquired point group of the first machine coordinates Pb of the measuring head 10 and 10a and the acquired distance data, the coordinates of the specific point (center point A1) of the real reference object (reference sphere 30), and the coordinates of the first specific point (first center point A1a) of the first virtual reference object (reference sphere 30f) are calculated.

Subsequently, the table 106 is swiveled on the X, Z plane about the swiveling center O1 by a predetermined angle θ by B-axis control.

The reference object (reference sphere 30) on the table 106 facing the second direction E12 is measured by the measuring head 10 and 10a. In other words, the reference sphere 30 is measured by irradiating the laser beam 21 on the reference sphere 30 from the measuring head 10 and 10a and by scanning the laser beam 21 as indicated by the trajectory L.

In this manner, a point group (i.e., point group) of the second machine coordinates Pb of the measuring head 10 and 10a, and distance data from the reference position Pa which is the focal point of the laser beam 21 are acquired (FIG. 3).

From the acquired point group of the second machine coordinates Pb of the measuring head 10 and 10a and the acquired distance data described above, the coordinates of the specific point (center point B1) of the real reference object (reference sphere 30), and the coordinates of the second specific point (second center point B1a) of the second virtual reference object (reference sphere 30g) are calculated (FIG. 17).

A real triangle G is formed by respective specific points (center points A1 and B1) of the real reference object (reference sphere 30) and the real swiveling center 01, before and after the table 106 is swiveled by a predetermined angle θ.

The real triangle G (i.e., triangle O1, A1, B1) is an isosceles triangle with the length of the side O1 to A1 being equal to the length of the side 01 to B1, and the apex angle being θ (FIG. 18).

A virtual triangle Ga is formed by the first specific point (center point A1a) of the first virtual reference object (reference sphere 30f), the second specific point (second center point B1a) of the second virtual reference object (reference sphere 30g), and a virtual swiveling center O1a.

The virtual triangle Ga (i.e., triangle O1a, A1a, B1a) is an isosceles triangle with the length of the side O1a to A1a being equal to the length of the side O1a to B1a, and the apex angle being θ (FIG. 18).

Comparing the real triangle G with the virtual triangle Ga, they have the same apex angle θ, and the two sides including the apex angle θ (i.e., sides O1 to A1, O1 to B1, O1a to A1a, and O1a to B1a) have the same length. Therefore, the real triangle G and the virtual triangle Ga are congruent.

The 3-dimensional offset R of the measuring head 10 and 10a is thus acquired, based on the fact that the real triangle G and the virtual triangle Ga are congruent.

Subsequently, the workpiece 4 is measured by the measuring head 10 and 10a by using the 3-dimensional offset R of the measuring head 10 and 10a itself.

In this manner, the 3-dimensional offset R of the measuring head 10 and 10a can be acquired even if the table 106 of the machine tool 101 swivels.

In addition, the 3-dimensional offset R (Rx, Ry, Rz) along the three perpendicular axes of the measuring head 10 and 10a can be acquired without information of the inclination angles $\alpha$ and $\beta$ of the laser beam 21 of the measuring head 10 and 10a.

A procedure of acquiring the 3-dimensional offset R of the measuring head 10 and 10a on the workpiece measuring apparatus 20 and 20a will be described.

First, the reference sphere 30 is temporarily placed at an arbitrary position on the table 106 via the supporting member 31 (step 201). In this occasion, the operator may place the reference sphere 30 at a suitable position on the table 106 because the position to be placed is not preliminarily set.

In the case of the wireless measuring head 10a, the measuring head 10a is attached to the main spindle 104 by the ATC 16 (or manually) (step 202). The procedure of step 202 is unnecessary for the wired measuring head 10.

Next, the table 106 is positioned toward the first direction E11.

The spindle head 105 then manually moves to the upper part of the reference sphere 30, and the measuring head 10 and 10a is positioned immediately above the reference sphere 30. The measuring head 10 and 10a is oriented downward and is facing the reference sphere 30 (step 203).

The reference sphere 30 on the table 106 facing the first direction E11 is thus measured by the measuring head 10 and 10a. The point group of the first machine coordinates Pb (FIG. 3) of the measuring head 10 and 10a and the distance data from the reference position Pa (FIG. 3) at this occasion are acquired from the NC unit 11 (step 204). The symbol L shown in FIG. 16, which is the trajectory measured by the laser beam 21, is helically shaped.

Using the point group of the first machine coordinates Pb of the measuring head 10 and 10a and the distance data from the reference position Pa which are acquired as described above, the coordinates of the first center point A1 of the real reference sphere 30 and the coordinates of the first center point A1a of the first virtual reference sphere 30f are calculated by the least square method (step 205).

Subsequently, the table 106 is swiveled on the X, Z plane about the swiveling center 01 by the predetermined angle $\theta$ by B-axis control and is oriented to the second direction E12 (step 206).

The reference sphere 30 mounted on the table 106 facing the second direction E12 is measured by the measuring head 10 and 10a. The point group of the second machine coordinates Pb of the measuring head 10 and 10a and the distance data from the reference position Pa of this occasion are acquired from the NC unit 11 (step 207).

By using the point group of the second machine coordinates Pb of the measuring head 10 and 10a and the distance data from the reference position Pa which are acquired as described above, the coordinates of the center point B1 of the real reference sphere 30 and the coordinates of the second center point B1a of the second virtual reference sphere 30g are calculated by the least square method (step 208).

The 3-dimensional offset R (Rx, Ry, Rz) of the measuring head 10 and 10a is acquired, by using the fact that the virtual triangle Ga and the real triangle G are congruent (step 209).

In this case, a vector O1A1 (Rx1, Ry1, Rz1) from the swiveling center O1 to the center point A1 of the reference sphere 30 is calculated. The vector O1A1 is calculated with the coordinates (X1, Y1, Z1) of the center point A1 of the reference sphere 30 before making swiveling the table 106 by an angle $\theta$, and the coordinates (X2, Y2, Z2) of the center point B1 of the reference sphere 30 after having swiveled the table 106 by the angle $\theta$, and the swivel angle $\theta$.

An equation for calculating the vector O1A1 is given as follows:

$$\overrightarrow{A_1B_1} = \overrightarrow{O_1B_1} - \overrightarrow{O_1A_1}$$

A determinant, when the table 106 has swiveled on the X, Z plane by the angle $\theta$, is given as follows:

$$\begin{vmatrix} \cos\theta & -\sin\theta \\ \sin\theta & \cos\theta \end{vmatrix}$$

Assuming that the vector O1B1 for this case is (Rx1', Ry1', Rz1'), the following equations (19) to (21) hold.

$$X2 - X1 = Rx1' - Rx1 = Rx1\,(\cos\theta - 1) + Rz1\,(-\sin\theta) \quad ...... (19)$$

$$Y2 - Y1 = 0 \qquad\qquad\qquad ...... (20)$$

$$Z2 - Z1 = Rz1' - Rz1 = Rx1\,\sin\theta + Rz1\,(\cos\theta - 1) \quad ...... (21)$$

In the two equations (19) and (21), the unknowns are only Rx1 and Rz1, and the Y-component Ry1 of the vector O1A1 is zero because the table 106 swivels on the X, Z plane. As a result, the vector O1A1 can be calculated with the two equations (19) and (21).

Subsequently, a vector O1A1a from the swiveling center O1 to the center point A1a of the first virtual reference sphere 30f, before the table 106 swivels, is calculated.

The 3-dimensional offset R of the measuring head 10 and 10a (i.e., vector A1A1a) can be calculated by subtracting the above-mentioned vector O1A1 from the calculated vector O1A1a. An equation for this calculation is given as follows:

$$\overrightarrow{A_1A_{1a}} = \overrightarrow{O_1A_{1a}} - \overrightarrow{O_1A_1}$$

The workpiece 4 is measured by the measuring head 10 and 10a, by using the 3-dimensional offset R (Rx, Ry, Rz) of the measuring head 10 and 10a itself thus calculated (step 210).

Next, a method for measuring a workpiece according to an exemplary variation (not shown) of the third embodiment will be described.

In this method, the procedures of the second and third embodiments are combined. The wired or wireless measuring head attached to the machine tool can swivel and move relatively to the workpiece along two axes of the three perpendicular axes except for the one axis along which the measuring head does not move. The table can swivel about the center of swiveling. The measuring head including the 3-dimensional offset measures the workpiece by the laser beam.

In this method, a reference object having an intrinsic specific point is placed at an arbitrary position on the table as described in the third embodiment. The measuring head measures the reference object on the table facing the first direction, and thereby acquires the point group of the first machine coordinates of the measuring head and the distance data from the reference position which is the focal point of the laser beam.

From the acquired point group and distance data, the coordinates of the specific point of the real reference object and the coordinates of the first specific point of the first virtual reference object are calculated.

Subsequently, the table is swiveled by a predetermined angle about the center of swivel. The reference object on the table facing a second direction is measured by the measuring head. Accordingly, a point group of the second machine coordinates of the measuring head and distance data from the reference position are acquired.

From the acquired point group and distance data, the coordinates of the specific point of the real reference object and the coordinates of the second specific point of the second virtual reference object are calculated.

A virtual triangle is formed by the first specific point of the first virtual reference object, the second specific point of the second virtual reference, and the virtual center of swiveling. In addition, a real triangle is formed by respective specific points of the real reference object before and after the table is swiveled by a predetermined angle, and the real center of swiveling. Based on the fact that the virtual triangle is congruent with the real triangle, each of the offsets in directions of the two perpendicular axes along which the measuring head moves is acquired.

As described in the second embodiment, the inclination angles of the laser beam are acquired by a predetermined means. An offset in the direction of one axis, along which the measuring head does not move, is calculated with the inclination angles of the laser beam.

The 3-dimensional offset of the measuring head is calculated, based on the respective offsets in the directions of two perpendicular axes along which the measuring head moves and the offset in the direction of one axis along which the measuring head does not move. Subsequently, the workpiece is measured by the measuring head by using the 3-dimensional offset of the measuring head itself.

(Fourth embodiment)

In a method for measuring a workpiece according to a fourth embodiment, the machine tool has wired or wireless measuring head 10 and 10a attached thereto, which can swivel and move relative to a workpiece along three (or two) perpendicular axes. The table can swivel about the center of swiveling. The measuring head 10 and 10a including the 3-dimensional offset R then measures the workpiece by the laser beam 21.

This method acquires the respective offsets in the directions of the two perpendicular axes along which the measuring head 10 and 10a moves, independently by each of the procedures according to the method of the first, second or third embodiment (or by combination of a plurality of the procedures). Subsequently, by each of the procedures in the method according to the second or third embodiment, the offset in the direction of the remaining one axis of the measuring head 10 and 10a is acquired.

The 3-dimensional offset R of the measuring head 10 and 10a is then calculated, based on the respective offsets in the directions of the two perpendicular axes, along which the measuring head 10 and 10a moves, and the offset in the direction of the remaining one axis. Subsequently, the workpiece is measured by the measuring head 10 and 10a, by using the 3-dimensional offset R of the measuring head 10 and 10a itself.

The workpiece measuring apparatus 20 and 20a described in the first to fourth embodiments can measure the workpiece 4 by the measuring head 10, 10a and 10b attached to the machine tool, and can machine the workpiece 4 by the tool 18 attached to the main spindle before or after the measurement.

Accordingly, the measurement function intrinsic to the measuring head 10, 10a and 10b is effectively used without separately using another measuring instrument such as a touch sensor or a dial gauge, and by simply placing a reference object such as the reference sphere 30 at an arbitrary position. As a result, the 3-dimensional offset R of the measuring head 10, 10a and 10b itself can be acquired to measure the workpiece 4 by the measuring head 10, 10a and 10b.

In the above embodiments, the measuring head 10, 10a and 10b is attached to the movable unit of the machine tool.

As an exemplary variation, the machine tool may be configured such that the member (e.g., spindle head) of the machine tool having the measuring head attached thereto does not move by itself, but the table moves, thereby causing the member to move relative to the workpiece on the table. As a result, the coordinates of the measuring head attached to the member move relative to the workpiece as the table moves.

In addition, the "arbitrary position" at which the reference object is placed is a position, which swivels relative to the measuring head by rotation of the rotating spindle and at which the measuring head can measure the reference object.

The tool 18 can be stocked in a tool magazine. The tool 18 is removably mounted on the main spindle and is automatically changed on the main spindle by the ATC 16 controlled by the NC unit 11. Therefore, a process of measuring the workpiece 4 by the measuring head 10, 10a and 10b can be added before a process of machining the workpiece 4 by the tool 18 attached to the main spindle (alternatively, in the middle of or after the machining process).

In this manner, the machining operation and the measurement operation continue in this order or in the reverse order. In other words, the machining operation and the measurement operation can be performed in an arbitrary combination.

As a result, without having to remove the workpiece 4 from the chuck 8 or the table 106 for measurement, the workpiece 4 can be measured in a 2- or 3-dimensional manner immediately after having completed machining, with the workpiece 4 still being attached to the chuck 8 or the table 106.

In addition, after having measured a non-machined workpiece 4, it is also possible to proceed to machining operation with the workpiece 4 still being attached. Furthermore, after having measured the workpiece 4 subsequent to machining, it is also possible to proceed to machining operation again with the workpiece 4 still being attached.

Upon receiving a measurement instruction, the measuring head 10 and 10a measures the workpiece 4 in a non-contact manner by measuring the distance from the measuring head 10 and 10a to the workpiece 4.

Since the measuring head 10 and 10a does not contact the workpiece 4 while the measuring head 10 and 10a is measuring, the measuring head 10 and 10a can scan at a high-speed, with safety, and without vibration (or with low vibration) to measure the workpiece 4 within a wide range in a short time.

The method and the apparatus for measuring a workpiece on a machine tool according to the present invention can be applied to a machine tool such as a lathe or a grinder, as well as a machining center and a multi-axis turning center, to measure a workpiece in a non-contact (or contact) manner by a wired or wireless measuring head.

The embodiments of the present invention (including exemplary variations) described above do not in any way limit the present invention, to which a variety of variations, additions, or the like can be made within the scope of the present invention.

Identical reference numerals in the drawings indicate identical or equivalent parts.

**Claims**

1. A method for measuring a workpiece (4) by a wired or wireless measuring head (10, 10a, 10b) including a 3-dimensional offset (R), wherein said measuring head (10, 10a, 10b) attached to a machine tool (1, 1a, 101) is capable of moving relative to said workpiece (4) along three perpendicular axes or two perpendicular axes and is capable of varying angle directions relative to said workpiece (4) by one or more swivel spindles,
said method comprising steps of:

   measuring a reference object (30, 30a, 30b) placed at an arbitrary position for a plurality of times in said relative angle direction being varied by said measuring head (10, 10a, 10b);
   calculating said 3-dimensional offset (R) of said measuring head (10, 10a, 10b) from variation of measurement results, along said three perpendicular axes, measured from the relative angle directions; and
   subsequently, measuring said workpiece (4) by said measuring head (10, 10a, 10b) by using said 3-dimensional offset (R) of said measuring head (10, 10a, 10b) itself.

2. A method for measuring a workpiece (4) by a wired or wireless measuring head (10, 10a, 10b) including a 3-dimensional offset (R), wherein said measuring head (10, 10a, 10b) attached to a machine tool (1) is capable of swiveling and moving relative to said workpiece (4) along three perpendicular axes or two perpendicular axes,
said method comprising steps of

   swiveling said measuring head (10, 10a, 10b) by a predetermined angle (θ) to measure a reference object (30, 30a, 30b) placed at an arbitrary position by said measuring head (10, 10a, 10b) from a first direction (E1) and a second direction (E2) respectively, and thereby acquiring coordinates of an intrinsic specific point (A1, A2, A3) of said reference object (30, 30a, 30b);
   calculating said 3-dimensional offset (R) of said measuring head (10, 10a, 10b), based on first machine coordinates (P1) of said measuring head (10, 10a, 10b) when said measuring head (10, 10a, 10b) measured said specific point (A1, A2, A3) of said reference object (30, 30a, 30b) from said first direction (E1), and second machine coordinates (P2) of said measuring head (10, 10a, 10b) when said measuring head (10, 10a, 10b) measured said specific point (A1, A2, A3) of said reference object (30, 30a, 30b) from said second direction (E2); and
   subsequently, measuring said workpiece (4) by said measuring head (10, 10a, 10b) by using said 3-dimensional offset (R) of said measuring head (10, 10a, 10b) itself.

3. A method for measuring a workpiece (4) by a laser beam (21) by using a wired or wireless measuring head (10, 10a) including a 3-dimensional offset (R), wherein said measuring head (10, 10a) attached to a machine tool (1a) is capable of swiveling and moving relative to said workpiece (4) along two axes of three perpendicular axes except for one axis along which said measuring head (10, 10a) does not move,
said method comprising steps of

   swiveling said measuring head (10, 10a) by a predetermined angle (θ) to measure a reference object (30) placed at an arbitrary position by said measuring head (10, 10a) from a first direction (E1) and a second direction (E2) respectively, and thereby acquiring coordinates of an intrinsic specific point (A1) of said reference object (30);
   acquiring respective offsets (Rx and Rz) in directions of said two perpendicular axes along which said measuring head (10, 10a) moves, according to first machine coordinates (P1) of said measuring head (10, 10a) when said measuring head (10, 10a) measured said specific point (A1) of said reference object (30) from said first direction (E1), and second machine coordinates (P2) of said measuring head (10, 10a) when said measuring head (10, 10a) measured said specific point (A1) of said reference object (30) from said second direction (E2);
   acquiring inclination angles ($\alpha$ and $\beta$) of said laser beam (21) by a predetermined means, and calculating, with the inclination angles ($\alpha$ and B) of the laser beam (21), an offset (Ry) in a direction of said one axis along which said measuring head (10, 10a) does not move;
   calculating said 3-dimensional offset (R) of said measuring head (10, 10a), based on said respective offsets (Rx and Rz) in directions of said two perpendicular axes along which said measuring head (10, 10a) moves, and based on said offset (Ry) in a direction of said one axis along which said measuring head (10, 10a) does not move; and
   subsequently, measuring said workpiece (4) by said measuring head (10, 10a) by using said 3-dimensional offset (R) of said measuring head (10, 10a) itself.

4. A method for measuring a workpiece (4) attached to a table (106) by a laser beam (21) by using a wired or wireless measuring head (10, 10a) which is attached to a machine tool (101) and includes a 3-dimensional offset (R), said table (106) being capable of swiveling about a swiveling center (O1) on said machine tool (101), said method comprising steps of

placing a reference object (30) having an intrinsic specific point (A1) at an arbitrary position on said table (106);
measuring said reference object (30) on said table (106) facing a first direction (E11) by said measuring head (10, 10a), and thereby acquiring a point group of first machine coordinates (Pb) of said measuring head (10, 10a) and distance data from a reference position (Pa) which is a focal point of said laser beam (21);
calculating, with the acquired point group and distance data, coordinates of said specific point (A1) of said real reference object (30) and coordinates of a first specific point (A1a) of a first virtual reference object (30f);
subsequently, swiveling said table (106) about said swiveling center (O1) by a predetermined angle ($\theta$);
measuring said reference object (30) on said table (106) facing a second direction (E12) by said measuring head (10, 10a), and thereby acquiring a point group of second machine coordinates (Pb) of said measuring head (10, 10a) and distance data from said reference position (Pa);
calculating, with the acquired point group and distance data, coordinates of said specific point (B1) of said real reference object (30) and coordinates of a second specific point (B1a) of a second virtual reference object (30g);
acquiring said 3-dimensional offset (R) of said measuring head (10 and 10a), based on the fact that a virtual triangle (Ga) formed by said first specific point (A1a) of said first virtual reference object (30f), said second specific point (B1a) of said second virtual reference object (30g), and a virtual swiveling center (O1a) is congruent with a real triangle (G) formed by said respective specific points (A1 and B1) of said real reference object (30) before and after swiveling of said table (106) by said predetermined angle ($\theta$) and said real swiveling center (O1); and
subsequently, measuring said workpiece (4) by said measuring head (10, 10a) by using said 3-dimensional offset (R) of said measuring head (10, 10a) itself.

5. A method for measuring a workpiece by a laser beam by using a wired or wireless measuring head including a 3-dimensional offset, wherein said measuring head attached to a machine tool is capable of swiveling and moving relative to said workpiece along two axes of three perpendicular axes except for one axis along which said measuring head does not move, and a table is capable of swiveling about a swiveling center on said machine tool, said method comprising steps of

placing a reference object having an intrinsic specific point at an arbitrary position on said table;
measuring said reference object on said table facing a first direction by said measuring head, and thereby acquiring a point group of first machine coordinates of said measuring head and distance data from a reference position which is a focal point of said laser beam;
calculating, with the acquired point group and distance data, coordinates of said specific point of said real reference object and coordinates of a first specific point of a first virtual reference object;
subsequently, swiveling said table about said swiveling center by a predetermined angle;
measuring said reference object on said table facing a second direction by said measuring head, and thereby acquiring a point group of second machine coordinates of said measuring head and distance data from said reference position;
calculating, with the acquired point group and distance data, coordinates of said specific point of said real reference object and coordinates of a second specific point of a second virtual reference object;
acquiring respective offsets in directions of said two perpendicular axes along which said measuring head moves, based on the fact that a virtual triangle formed by said first specific point of said first virtual reference object, said second specific point of said second virtual reference object, and a virtual swiveling center is congruent with a real triangle formed by said respective specific points of said real reference object before and after swiveling of said table by said predetermined angle and said real swiveling center;
acquiring inclination angles of said laser beam by a predetermined means, and calculating, with the inclination angles of the laser beam, an offset in a direction of said one axis along which said measuring head does not move;
calculating said 3-dimensional offset of said measuring head, based on said respective offsets in directions of said two perpendicular axes along which said measuring head moves, and said offset in a direction of said one axis along which said measuring head does not move; and
subsequently, measuring said workpiece by said measuring head by using said 3-dimensional offset of said measuring head itself.

**6.** A method for measuring a workpiece by a laser beam (21) by using a wired or wireless measuring head (10, 10a) including a 3-dimensional offset (R), wherein said measuring head (10, 10a) attached to a machine tool is capable of swiveling and moving relative to said workpiece along three perpendicular axes or two perpendicular axes, and a table is capable of swiveling about a swiveling center on said machine tool, said method comprising steps of:

acquiring respective offsets in directions of said two perpendicular axes along which said measuring head (10, 10a) moves, independently by each of said procedures according to claim 2, 3 or 4, or by combination of a plurality of said procedures;

acquiring, by each of said procedures according to claim 3 or 4, the offset in a direction of remaining one axis of said measuring head (10, 10a);

calculating said 3-dimensional offset (R) of said measuring head (10, 10a), based on respective offsets in directions of said two perpendicular axes along which said measuring head (10, 10a) moves, and an offset in a direction of said remaining one axis; and

subsequently, measuring said workpiece by said measuring head (10, 10a) by using said 3-dimensional offset (R) of said measuring head (10, 10a) itself.

**7.** A workpiece measuring apparatus on a machine tool for measuring said workpiece (4) by using said measuring head (10, 10a, 10b) by a measurement method according to any one of claims 1 to 6.

# FIG.1

WORKPIECE
MEASURING
APPARATUS

16

ATC

11 — NC UNIT

MEASURING APPARATUS
CONTROL UNIT — 24

20

# FIG.2

WORKPIECE
MEASURING
APPARATUS

23 — TRANSCEIVER

16

ATC

NC UNIT

11

MEASURING APPARATUS
CONTROL UNIT

20a

24

# FIG.3

# FIG.4

Pb

3,19,105

2,104

$\vec{R}$

10b

CL₁

22

Pa

4

# FIG.5

$E_1$

3,19,105

2,104

$P_1(x_1, y_1, z_1)$

10,10a

21

30

$A_1(x_c, y_c, z_c)$

31

7

X

Y

Z

# FIG.6

# FIG.7

# FIG.8A

10,10a

21

L

30

A1

# FIG.8B

10,10a

21

L

30

A1

## FIG.8C

## FIG.8D

# FIG.9

START

POSITION MEASURING HEAD FACING DOWNWARD. —101

PLACE REFERENCE SPHERE ON TURRET. —102

POSITION MEASURING HEAD IMMEDIATELY ABOVE REFERENCE SPHERE. —103

ACQUIRE COORDINATES OF CENTER POINT OF REFERENCE SPHERE. —104

ACQUIRE FIRST MACHINE COORDINATES OF MEASURING HEAD FACING FIRST DIRECTION. —105

SWIVEL MEASURING HEAD BY PREDETERMINED ANGLE TO FACE SECOND DIRECTION. —106

ACQUIRE COORDINATES OF CENTER POINT OF REFERENCE SPHERE. ADJUST POSITION OF MEASURING HEAD. —107

ACQUIRE SECOND MACHINE COORDINATES OF MEASURING HEAD FACING SECOND DIRECTION. —108

CALCULATE 3-DIMENSIONAL OFFSET OF MEASURING HEAD. —109

MEASURE WORKPIECE BY MEASURING HEAD. —110

END

# FIG.10

# FIG.11

WORKPIECE
MEASURING
APPARATUS

23 — TRANSCEIVER

16

ATC

11 — NC UNIT

20a

MEASURING APPARATUS
CONTROL UNIT — 24

# FIG.12A

# FIG.12B

# FIG.13

# FIG.14

# FIG.15

# FIG.16

# FIG.17

# FIG.18

# FIG.19

```
              ┌──────────┐
              │  START   │
              └──────────┘
                   │
                   ▼
```

PLACE REFERENCE SPHERE ON TABLE. — 201

ATTACH WIRELESS MEASURING HEAD TO MAIN SPINDLE. — 202

POSITION MEASURING HEAD IMMEDIATELY ABOVE REFERENCE SPHERE. — 203

MEASURE REFERENCE SPHERE FACING FIRST DIRECTION BY MEASURING HEAD.
ACQUIRE POINT GROUP OF FIRST MACHINE COORDINATES OF MEASURING HEAD AND DISTANCE DATA. — 204

CALCULATE COORDINATES OF CENTER POINT OF REAL REFERENCE SPHERE AND COORDINATES OF FIRST CENTER POINT OF FIRST VIRTUAL REFERENCE SPHERE. — 205

SWIVEL TABLE BY PREDETERMINED ANGLE TO FACE SECOND DIRECTION. — 206

MEASURE REFERENCE SPHERE FACING SECOND DIRECTION BY MEASURING HEAD.
ACQUIRE POINT GROUP OF SECOND MACHINE COORDINATES OF MEASURING HEAD AND DISTANCE DATA. — 207

CALCULATE COORDINATES OF CENTER POINT OF REAL REFERENCE SPHERE AND COORDINATES OF SECOND CENTER POINT OF SECOND VIRTUAL REFERENCE SPHERE. — 208

CALCULATE 3-DIMENSIONAL OFFSET OF MEASURING HEAD. — 209

MEASURE WORKPIECE BY MEASURING HEAD. — 210

```
              ┌──────────┐
              │   END    │
              └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4203917 A

- US 06199024 B